# EUROPÄISCHE PATENTSCHRIFT

(11) **EP 2 338 126 B1**
(45) Veröffentlichungstag und Bekanntmachung des Hinweises auf die Patenterteilung: **21.03.2012**
(21) Anmeldenummer: 09778402.9
(22) Anmeldetag: 08.09.2009
(51) Int. Cl.: G06F 21/00

(54) **FREIGABE VON TRANSAKTIONSDATEN**
RELEASE OF TRANSACTION DATA
DÉBLOCAGE DE DONNÉES DE TRANSACTION

(30) Priorität: 09.09.2008 DE 102008046339
(43) Veröffentlichungstag der Anmeldung: 29.06.2011
(73) Patentinhaber: Giesecke & Devrient GmbH, 81677 München (DE)
(72) Erfinder: STOCKER, Thomas, 81739 München (DE); BALDISCHWEILER, Michael, 81825 München (DE)
(86) Internationale Anmeldenummer: PCT/EP2009/006513
(87) Internationale Veröffentlichungsnummer: WO 2010/028805

(56) Entgegenhaltungen:
- EP-A1- 1 659 546
- EP-A2- 1 046 976
- US-A1- 2008 179 403

## Beschreibung

Die vorliegende Erfindung betrifft ein auf einem portablen Datenträger realisiertes Verfahren zur Freigabe von für eine Abarbeitung ausgewählten Transaktionsdaten, einen derartigen Datenträger sowie ein Transaktionssystem mit einem derartigen Datenträger.

Die Ausführung einer Transaktion durch ein lokales Transaktionsterminal oder durch einen über ein Datenkommunikationsnetzwerk zugänglichen Transaktionsserver wird häufig durch eine Datenkommunikation mit einem portablen Datenträger eines Benutzers veranlasst. Derartige Transaktionen können beispielsweise geldwerte Transaktionen oder dergleichen sein, z.B. eine Bargeldentnahme mit einer Chipkarte an einem lokalen Bankterminal oder eine von einem Transaktionsserver einer Bank auszuführende Bank-überweisung, die z.B. mittels eines personalisierten USB-Speicherelements oder einer Mobilfunkkarte über ein lokales Ein-/ Ausgabegerät veranlasst wird, z.B. über ein stationäres Terminal, einen Personalcomputer, ein Mobilfunkendgerät oder dergleichen, welches die eigentliche Transaktion nicht ausführt sondern dem jeweiligen Datenträger lediglich einen Zugang zu dem Transaktionsserver bereitstellt. Hierbei besteht häufig das Problem, dass ein derartiges mit dem Datenträger direkt verbundenes Transaktionsterminal oder Ein-/ Ausgabegerät nicht ausreichend abgesichert ist, um eine Manipulation der Transaktion durch einen Dritten auszuschließen. Hierzu ist zumindest eine abgesicherte, nicht manipulierbare Datenübertragungsverbindung zwischen dem Datenträger und dem Transaktionsterminal oder Ein-/Ausgabegerät erforderlich.

Die übliche Angabe einer persönlichen Identifikationsnummer (PIN) auf einem lokalen Transaktionsterminal und deren Vergleich mit einer auf dem Datenträger gespeicherten Referenznummer bietet neben der Authentisierung des Benutzers gegenüber dem Datenträger keine weitere Absicherung des Transaktionsterminals oder der Datenkommunikationsverbindung zu dem Datenträger, so dass nicht sichergestellt werden kann, dass die von dem Benutzer tatsächlich gewünschte und nicht eine von dritter Seite manipulierte Transaktion ausgeführt wird. Hiervon ausgehend schlägt die DE 41 42 964 C2 vor, vor der Eingabe einer PIN durch den Benutzer zunächst die Vertrauenswürdigkeit des Transaktionsterminals sicherzustellen. Hierzu wird ein auf dem Datenträger hinterlegtes, nur dem Benutzer bekanntes Datenwort verschlüsselt an das Transaktionsterminal übertragen, dort entschlüsselt und auf einer Anzeigeeinrichtung des Transaktionsgeräts angezeigt, so dass der Benutzer bei korrekter Anzeige des Datenworts die Vertrauenswürdigkeit des Transaktionsgeräts feststellen kann. Die Sicherheit des Transaktionsgeräts wird also durch Ver- und Entschlüsselung des geheimen Datenworts mittels korrespondierender Verschlüsselungs- und Entschlüsselungsschlüssel gewährleistet.

In der EP 1659 546 A1 wird die Transaktionssicherheit verbessert, indem der Datenträger ein Akustiksignal eines gesprochenen Textes elektronisch erzeugt und über ein Transaktionsterminal abspielt, wodurch eine direkte Kommunikation zwischen dem Datenträger und dem Benutzer unter weitgehender Umgehung des unsicheren Transaktionsterminals ermöglicht wird. Der vorgeschlagene Datenträger hat hierfür eine besondere akustische Schnittstelle mit einem Audioausgang, über den das erzeugte Akustiksignal auf dem Datenträger abgespielt und zur Wiedergabe an eine Lautsprecher-/ Kopfhörereinrichtung des Transaktionsterminals übertragen werden kann. Der durch das Akustiksignal wiedergegebene gesprochene Text kann beispielsweise eine Anweisung an den Benutzer enthalten, eine modifizierte PIN einzugeben. Sofern der Benutzer auf den gesprochenen Text in der vorgesehenen Weise reagiert, wird die gewünschte Transaktion von dem Transaktionsterminal ausgeführt. US 2008/0179403 A1 zeigt eine Karte mit Lautsprecher, über welchen Transaktionsdaten oder eine benutzerspezifische Musik ausgegeben werden können.

Vor diesem Hintergrund ist es die Aufgabe der vorliegenden Erfindung, eine sichere Ausführung einer Transaktion auf einem prinzipiell unsicheren Endgerät über eine abgesicherte Datenkommunikationsverbindung zwischen einem Datenträger und einem Endgerät zu ermöglichen.

Diese Aufgabe wird erfindungsgemäß durch ein Verfahren, einen portablen Datenträger und ein Transaktionssystem mit den Merkmalen der unabhängigen Ansprüche gelöst. Die davon abhängigen Ansprüche beschreiben vorteilhafte Ausgestaltungen und Weiterbildungen der Erfindung.

Eine Transaktion wird durch die Abarbeitung von Transaktionsdaten ausgeführt, welche die gewünschte Transaktion definieren. Erfindungsgemäß wird die Abarbeitung von Transaktionsdaten durch einen Benutzer eines mit einem Endgerät verbundenen portablen Datenträgers freigegeben, indem der Datenträger ein Transaktionsakustiksignal erzeugt, das eine dem Benutzer bekannte, für ihn spezifische Melodie sowie vorher von dem Benutzer gegenüber dem Endgerät angegebene, die gewünschte Transaktion definierende Transaktionsdaten akustisch überlagert wiedergibt, das erzeugte Transaktionsakustiksignal an das Endgerät elektronisch überträgt und das Endgerät das elektronisch empfangene Transaktionsakustiksignal akustisch wiedergibt. Hierbei ist unter einer akustisch überlagerten Wiedergabe der benutzerspezifischen Melodie und weiteren Daten, wie z.B. den gewünschten Transaktionsdaten, eine zumindest teilweise überlappende Wiedergabe, vorzugsweise eine im wesentlichen gleichzeitige Wiedergabe der benutzerspezifischen Melodie und der weiteren Daten zu verstehen. Die Transaktionsdaten werden nur dann abgearbeitet, wenn der Benutzer eine zumindest teilweise Ubereinstimmung der wiedergegebenen Melodie mit der ihm bekannten, auf dem Datenträger vorliegenden benutzerspezifischen Melodie sowie eine Übereinstimmung der wiedergegebenen Transaktionsdaten mit den vorher angegebenen Transaktionsdaten gegenüber dem Endgerät freigibt.

Das Transaktionsakustiksignal ist also insbesondere dazu geeignet, dass der Benutzer infolge der Wiedergabe des Transaktionsakustiksignals durch das Endgerät sowohl eine zumindest teilweisen Übereinstimmung der akustisch wiedergegebenen Melodie mit der benutzerspezifischen Melodie als auch eine Übereinstimmung der akustisch wiedergegebenen Transaktionsdaten mit den ausgewählten Transaktionsdaten erkennen kann, um diese zur Freigabe der Transaktionsdaten gegenüber den Endgerät zu bestätigen. Aus diesem Grund wird das Transaktionsakustiksignal dadurch erzeugt, dass ein auf dem Datenträger vorliegendes, die benutzerspezifische Melodie wiedergebendes Benutzerakustiksignal und ein die Transaktionsdaten in gesprochener oder in einer sonstigen rezitierten Weise wiedergebendes Sprachakustiksignal akustisch überlagert werden. Das Sprachakustiksignal wird ggf. durch eine akustische Wandlung der zunächst lediglich textuell vorliegenden Transaktionsdaten in das Sprachakustiksignal erzeugt, z.B. durch einen geeigneten Sprachgenerator, einen Synthesizer oder eine digitale Aufnahme bzw. Umsetzung der von dem Benutzer rezitierten Transaktionsdaten.

Die Freigabe der Transaktionsdaten kann beispielsweise in einer einseitigen Handlung des Benutzers gegenüber dem Endgerät ohne weitere Beteiligung des Datenträgers bestehen, z.B. durch Drücken eines an dem Endgerät eingerichteten Bestätigungsknopfs oder Eingeben einer Bestätigungsanweisung, oder auch eine weitere Datenkommunikation zwischen dem Endgerät und dem Datenträger erfordern.

Nachfolgend ist unter einem Endgerät sowohl ein mit dem Datenträger direkt verbindbares Transaktionsterminal zu verstehen, das freigegebene Transaktionsdaten selbst abarbeiten kann, als auch ein reines Ein-/ Ausgabe- bzw. Wiedergabegerät, das mit dem Datenträger lediglich im Rahmen der Freigabeerteilung kommuniziert und die weitere Transaktionsbearbeitung einem entfernten Transaktionsserver oder dergleichen überlässt.

Die vorliegende Erfindung macht sich zunutze, dass eine für den Benutzer des Datenträgers spezifische Melodie in Form eines digitalen Transaktionsakustiksignals an das Endgerät übertragen werden kann, aus dessen Dateistruktur diese Melodie zunächst nicht abzuleiten und deshalb auch nur schwer zu manipulieren ist. Unter der benutzerspezifischen Melodie ist nachfolgend insbesondere eine Melodie oder ein sonstiger dem Benutzer zuzuordnender melodischer Klangeindruck zu verstehen, z.B. seine Lieblingsmelodie oder eine sonstige beispielsweise aus dem Internet herunterladbare Melodie, die der Benutzer selbst bestimmen kann. Er kann die Melodie beispielsweise durch Auswahl aus einer List auf einem Server oder aus dem Internet oder durch Bereitstellen eines entsprechenden Benutzerakustiksignals bestimmen. Ebenso kann der Benutzer die benutzerspezifische Melodie durch Vorsingen, Vorsummen, Vorspielen und Aufzeichnen durch eine geeignete Aufzeichnungsvorrichtung bestimmen, die ein digitales Benutzerakustiksignal mit der vorgetragenen Melodie erzeugt.

Da die Melodie auch eine bekannte bzw. populäre Melodie sein kann, ist es zusätzlich möglich, diese zu verfremden oder zu verschleiern, um dadurch eine weitergehende Benutzerindividualisierung zu erreichen, durch die die bekannte Melodie einerseits nicht mehr so leicht erkennbar ist und andererseits eine Manipulation oder spektrale Analyse des entsprechende Transaktionsakustiksignals bzw. eine Extraktion der benutzerspezifischen Melodie erschwert wird. Die Verfremdung kann beispielsweise in einem der Melodie akustisch überlagerten charakteristischen Geräusch oder einem anderer zusätzlichen komplexen Akustikeindruck bestehen, der selbst dann, wenn er von einem Dritten mitgehört wird, von diesem nicht ohne weiteres zusammen mit der benutzerspezifischen Melodie nachgebildet werden kann. Im Gegensatz zu bekannten Lösungen ist eine derartige Melodie aufgrund der komplexen spektralen Hörempfindung eines Benutzers wesentlich weniger anfällig für Manipulationen als beispielsweise eine numerische oder textuelle Information oder eine gesprochene Anweisung an den Benutzer.

Für die Freigabe einer Abarbeitung der Transaktionsdaten ist es neben der Übereinstimmung der von dem Endgerät wiedergegebenen Transaktionsdaten mit den von Benutzer angegebenen Transaktionsdaten ausreichend, wenn der Benutzer zumindest eine teilweise Übereinstimmung der wiedergegebenen Melodie mit der benutzerspezifischen Melodie feststellt, z.B. die durch ein überlagertes Störgeräusch verfremdete benutzerspezifische Melodie oder einen Teil dieser Melodie.

Durch die akustische Wiedergabe des erzeugten Transaktionsakustiksignals hört der Benutzer einerseits die ihm bekannte benutzerspezifische Melodie und andererseits die von ihm bereits zuvor ausgewählten Transaktionsdaten. Der Benutzer kann also einerseits prüfen, ob das Transaktionsakustiksignal unmanipuliert übertragen wurde, da er andernfalls die wiedergegebene Melodie nicht identifizieren kann, und kann andererseits prüfen, ob die zuvor von ihm gegenüber dem Endgerät ausgewählten Transaktionsdaten korrekt an den Datenträger übertragen wurden und dort unmanipuliert vorliegen.

Insbesondere ist es vorteilhaft, wenn das Benutzerakustiksignal mit der benutzerspezifischen Melodie und das Sprachakustiksignal mit den ausgewählten Transaktionsdaten bei der Erzeugung des Transaktionsakustiksignals derart akustisch überlagert werden, dass bei einer akustischen Wiedergabe des erzeugten Transaktionsakustiksignals die akustische Wiedergabe der benutzerspezifischen Melodie einerseits und die der Transaktionsdaten andererseits im wesentlichen gleichzeitig beginnt und endet, so dass vorzugsweise keines der beiden Akustiksignalanteile separat und unüberlagert wiedergegeben wird. Dadurch wird eine leichte Analyse/Synthese der benutzerspezifischen Melodie und der Transaktionsdaten anhand etwaigen isoliert wiedergegebenen Akustiksignalanteilen vermieden.

Ebenso kann die Manipulationssicherheit sowie die Erkennbarkeit durch den Benutzer weiter erhöht werden, indem nicht nur die benutzerspezifische Melodie sondern auch das die Transaktionsdaten wiedergebende Sprachakustiksignal benutzerindividualisiert ist, z.B. dadurch, dass ein Sprachakustiksignal erzeugt wird, dass die von dem Benutzer vorgesprochenen, vorgesungenen oder anderweitig vorgetragenen Transaktionsdaten wiedergibt. Dazu werden die für eine Abarbeitung ausgewählten Transaktionsdaten vor der Erzeugung des Transaktionsakustiksignals in ein Sprachakustiksignal gewandelt oder es wird dem Datenträger ein die ausgewählten Transaktionsdaten wiedergebendes Sprachakustiksignal elektronisch bereitgestellt, bei dessen akustischer Wiedergabe die Transaktionsdaten von dem Benutzer vorgetragen wiedergegeben werden.

Zur Angabe der gewünschten Transaktion wählt der Benutzer auf dem Endgerät, beispielsweise über eine interaktive Eingabeeinrichtung wie z.B. eine Tastatur, die entsprechenden Transaktionsdaten oder eine den gewünschten Transaktionsdaten eindeutig zugeordnete Transaktionsbezeichnung aus, z.B. eine Transaktionsnummer, einen Transaktionsnamen oder dergleichen.

Die ausgewählten Transaktionsdaten bzw. vorzugsweise deren Transaktionsbezeichnung wird an den Datenträger elektronisch übertragen, wo die elektronisch empfangenen Transaktionsdaten bzw. die der elektronisch empfangenen Transaktionsbezeichnung zugeordneten Transaktionsdaten in ein akustisch wiedergebbares Sprachakustiksignal gewandelt und mit der auf dem Datenträger als Benutzerakustiksignal digital vorliegenden benutzerspezifischen Melodie akustisch überlagert werden. Bei der akustischen Überlagerung wird in das Benutzerakustiksignal das Sprachakustiksignal mit den ausgewählten Transaktionsdaten geeignet integriert bzw. spektral addiert und so das an das Endgerät zu übertragende und von diesem wiederzugebende Transaktionsakustiksignal erzeugt.

Das auf dem Datenträger vorliegende Benutzerakustiksignal wird vorzugsweise bereits bei der Personalisierung des Datenträgers durch einen Datenträgerhersteller oder -herausgeber eingespielt, so dass das Benutzerakustiksignal benutzerindividualisiert ist und einen Teil der Personalisierung des Datenträgers bildet. Auch können im Rahmen einer Personalisierung mehrere derartige Benutzerakustiksignale mit jeweils anderen oder abgewandelten benutzerspezifischen Melodien auf dem Datenträger hinterlegt werden. Derartige personalisierte Datenträger sind beispielsweise Chipkarten, Smart Cards, Mobilfunkkarten oder ähnliche Transaktionskarten.

Vorzugsweise werden die von dem Benutzer ausgewählten Transaktionsdaten bzw. die Transaktionsbezeichnung der ausgewählten Transaktionsdaten von dem Datenträger wiederum mit einer von dem Datenträger bereitgestellten eindeutigen Transaktionsidentifikation verknüpft. Während die den betreffen Transaktionsdaten fest zugeordnete Transaktionsbezeichnung prinzipiell Dritten bekannt sein kann und nur der leichteren Auswahl von Transaktionsdaten durch den Benutzer dient, ist die variable Transaktionsidentifikation zunächst nur dem Datenträger bekannt und repräsentiert demzufolge ein Sicherheitsmerkmal, da ihre korrekte Kenntnis auf eine unmanipulierte Datenkommunikationsverbindung zwischen dem Datenträger und dem Endgerät schließen lässt.

Deshalb erzeugt und überträgt der Datenträger vorzugsweise ein Transaktionsakustiksignal an das Endgerät, das neben der benutzerspezifischen Melodie und dem Sprachakustiksignal der ausgewählten Transaktionsdaten auch ein Sprachakustiksignal mit der Transaktionsidentifikation akustisch überlagert wiedergibt. Dabei werden die gewandelten Transaktionsdaten und die gewandelte Transaktionsidentifikation mit dem auf dem Datenträger hinterlegten Benutzerakustiksignal akustisch überlagert, z.B. spektral addiert. Hierbei können die beiden Sprachakustiksignale nahezu beliebig mit dem Benutzerakustiksignal akustisch überlagert werden, beispielsweise zeitlich nacheinander oder verschachtelt, z.B. in verschiedenen Tonhöhen, Sprachfärbungen oder dergleichen. Vorzugsweise wird jedoch bei der akustischen Widergabe des erzeugten Transaktionsakustiksignals kein Anteil der benutzerspezifischen Melodie isoliert, d.h. ohne gleichzeitige Wiedergabe der Transaktionsdaten oder der Transaktionsidentifikation wiedergegeben. Umgekehrt wird auch kein Anteil der Transaktionsdaten oder der Transaktionsidentifikation isoliert, d.h. ohne gleichzeitige Wiedergabe der benutzerspezifischen Melodie wiedergegeben.

Bei der gleichzeitigen Wiedergabe kann insbesondere die besondere Eigenschaft des menschlichen Hörsinns ausgenutzt werden, verschiedene Höreindrücke spektral aufgelöst wahrnehmen zu können. Selbstverständlich können auch zwei Transaktionsakustiksignale erzeugt, übertragen und wiedergegeben werden, die die benutzerspezifische Melodie einerseits mit der Transaktionsidentifikation und anderseits mit den Transaktionsdaten akustisch überlagert wiedergeben.

Bei der Wiedergabe des Transaktionsakustiksignals durch das Endgerät werden dem Benutzer also vorzugsweise sowohl die benutzerspezifische Melodie als auch die Transaktionsdaten und die Transaktionsidentifikation, z.B. gesprochen, gesungen oder anderweitig rezitiert, akustisch überlagert zu Gehör gebracht. Der Benutzer kann dann die zumindest teilweise Übereinstimmung der wiedergegebenen Melodie mit der ihm bekannten benutzerspezifischen Melodie sowie die Übereinstimmung der akustisch wiedergegebenen Transaktionsdaten mit den zuvor ausgewählten Transaktionsdaten durch elektronische Eingabe der ebenfalls akustisch wiedergegebenen Transaktionsidentifikation über eine Eingabeeinrichtung des Endgeräts bestätigen. Die eingegebene Transaktionsidentifikation wird dann an den Datenträger elektronisch übertragen, der sie mit der von ihm erzeugten Transaktionsidentifikation vergleicht.

Der Datenträger erzeugt hierbei vorzugsweise zu Beginn des erfindungsgemäßen Verfahrens für alle möglichen, von einem Benutzer prinzipiell auswählbaren Transaktionsdaten bzw. deren Transaktionsbezeichnungen variable, wechselseitig verschiedene Transaktionsidentifikationen. Während die Transaktionsdaten und deren Transaktionsbezeichnungen anschließend zur Auswahl durch den Benutzer an das Endgerät elektronisch übertragen werden, verbleiben die individuellen Transaktionsidentifikationen jedoch auf dem Datenträger. Auf diese Weise bleibt für Dritte vollständig unbekannt, welche Transaktionsidentifikation bestimmten Transaktionsdaten zugeordnet ist. Bei weiteren von dem Benutzer gewünschten Transaktionen kann dann die jeweilige bereits zu Verfahrensbeginn erzeugte Transaktionsidentifikation der betreffenden Transaktionsdaten verwendet werden.

Alternativ kann eine Transaktionsidentifikation von dem Datenträger auch für bereits ausgewählte Transaktionsdaten individuell erzeugt werden, erst nachdem der Datenträger die von dem Benutzer gegenüber dem Endgerät ausgewählten Transaktionsdaten oder deren Transaktionsbezeichnung elektronisch empfangen hat. Auch hier verbleibt die zugeordnete, individuelle Transaktionsidentifikation auf dem Datenträger und ist für Dritte unbekannt. Vorzugsweise wird die Transaktionsidentifikation als Zufallszahl oder zufällige Zeichenkette jedes Mal neu erzeugt, wenn sie von dem Danträger benötigt wird.

Da die Transaktionsidentifikation von dem Datenträger vorzugsweise transaktionsindividuell erzeugt wird und deshalb dem Benutzer bis zu ihrer akustischen Wiedergabe durch das Endgerät unbekannt ist, bestätigt der Benutzer durch ihre korrekte Eingabe einerseits ein Wiedererkennen der benutzerspezifischen Melodie und der ausgewählten Transaktionsdaten und andererseits wird eine Manipulation der Datenkommunikationsverbindung zwischen dem Endgerät und dem Datenträger für einen Dritten erschwert bzw. gar sinnlos, da die Transaktionsidentifikation - im Gegensatz zu der wenigstens auch dem Benutzer bekannten benutzerspezifischen Melodie - nur dem Datenträger bekannt ist.

Ein erfindungsgemäßer portabler Datenträger umfasst entsprechend zumindest einen Prozessor, einen Speicher, in dem zumindest das Benutzerakustiksignal gespeichert ist, welches die für den Benutzer spezifische Melodie wiedergibt, sowie eine Datenkommunikationsschnittstelle zur Datenkommunikation mit dem Endgerät. Ferner umfasst der Datenträger eine Steuereinrichtung, beispielsweise in Form einer von dem Prozessor ausführbaren Softwareapplikation, die das erfindungsgemäße Verfahren datenträgerseitig steuert und kontrolliert. Die Steuereinrichtung erzeugt und überträgt ein Transaktionsakustiksignal über die Datenkommunikationsschnittstelle an das Endgerät, welches die benutzerspezifischen Melodie sowie die Transaktionsdaten akustisch wiedergibt.

Die Steuereinrichtung ist insbesondere eingerichtet, das Transaktionsakustiksignal durch akustisches Überlagern des gespeicherten Benutzerakustiksignals und zumindest eines Sprachakustiksignal, das die ausgewählten Transaktionsdaten wiedergibt, derart zu erzeugen, dass bei dessen akustischer Wiedergabe zumindest die ausgewählte Transaktionsdaten mit der benutzerspezifischen Melodie akustisch überlagert wiedergegeben werden.

Ein derartiger portabler Datenträger bildet zusammen mit einem entsprechenden Endgerät ein erfindungsgemäßes Transaktionssystem, wobei das Endgerät eingerichtet ist, von dem Datenträger empfangene Transaktionsakustiksignale über eine Wiedergabeeinrichtung akustisch wiederzugeben und von dem Benutzer über eine Eingabeeinrichtung des Endgeräts eingegebene Daten an den Datenträger elektronisch zu übertragen, wie z.B. eine Transaktionsbezeichnung zur Auswahl von Transaktionsdaten oder eine bestätigende Transaktionsidentifikation. Ferner ist das Endgerät je nach Funktion und Ausgestaltung eingerichtet, freigegebene Transaktionsdaten als Transaktionsterminal selbst abzuarbeiten, oder, vorzugsweise, lediglich die Freigabe der Transaktionsdaten von dem Benutzer bzw. von seinem Datenträger einzuholen und die eigentliche Abarbeitung der Transaktionsdaten einem Transaktionsserver oder dem Datenträger zu überlassen. In diesem Fall umfasst ein erfindungsgemäßes Transaktionssystem auch einen über eine geeignete Datenkommunikationsverbindung mit dem Endgerät oder mit dem Datenträger verbundenen Transaktionsserver.

Sofern nach der elektronischen Übertragung des Transaktionsakustiksignals an das Endgerät zur Freigabe der Transaktionsdaten nicht nur eine einseitige Handlung des Benutzers gegenüber den Endgerät erforderlich ist, empfängt die Steuereinrichtung bei einer bevorzugten Ausführungsform der Erfindung ein Bestätigungssignal von dem Endgerät - vorzugsweise durch elektronische Übertragung der den ausgewählten Transaktionsdaten zugeordneten Transaktionsidentifikation -, wonach die von dem Endgerät akustisch wiedergegebene Melodie zumindest teilweise mit der benutzerspezifischen Melodie übereinstimmt und die akustisch wiedergegebenen Transaktionsdaten mit den von dem Benutzer ausgewählten Transaktionsdaten übereinstimmen. Der Datenträger prüft dann nach Eingang der von dem Benutzer auf dem Endgerät eingegebenen Transaktionsidentifikation, ob die empfangene Transaktionsidentifikation mit der auf dem Datenträger hinterlegten und von diesem vorher erzeugten Transaktionsidentifikation übereinstimmt. Bei Übereinstimmung der empfangenen und der hinterlegten Transaktionsidentifikation beantwortet die Steuereinrichtung des Datenträgers die Bestätigung der benutzerspezifischen Melodie und der Transaktionsdaten mit einem entsprechenden Freigabesignal an das Endgerät, wodurch schließlich die Abarbeitung der ausgewählten Transaktionsdaten gegenüber dem Endgerät freigegeben wird.

Bei einer Ausführungsvariante erzeugt der Datenträger als Freigabesignal ein Freigabedatensignal, das vorzugsweise zumindest nochmals die Transaktionsdaten umfasst. Das Freigabedatensignal kann neben den Transaktionsdaten noch weitere Datenanteile umfassen, z.B. eine digitale Signatur des Datenträgers oder seines Benutzers, die von dem Endgerät mit einem entsprechenden Verifikationsschlüssel überprüfbar ist.

Bei einer weiteren Ausführungsvariante erzeugt der Datenträger als Freigabesignal ein Freigabeakustiksignal, das zumindest die benutzerspezifische Melodie und einen von dem Datenträger erzeugten Freigabecode als Sprachakustiksignal akustisch überlagert wiedergibt, und überträgt das Freigabeakustiksignal zur akustischen Wiedergabe an das Endgerät. Hierbei wird der Freigabecode ebenso wie die Transaktionsidentifikation derart individuell erzeugt, dass er für Dritte unbekannt ist, z.B. in Form einer zufälligen Zeichenkette oder dergleichen. Die ausgewählten und dann bestätigten Transaktionsdaten werden abgearbeitet, wenn der Benutzer den akustisch wiedergegebenen Freigabecode korrekt in das Endgerät eingibt, d.h. wenn ein von dem Benutzer infolge der akustischen Wiedergabe eingegebener Freigabecode mit dem von dem Datenträger erzeugten und in das Freigabeakustiksignal eingebrachten Freigabecode übereinstimmt. Wahlweise können auch die Transaktionsdaten entweder zusätzlich in das Freigabeakustiksignal eingebracht oder als weiteres Akustiksignal erzeugt und an das Endgerät übertragen werden.

Vorzugsweise wird durch den Datenträger zur Vorbereitung der Auswahl von Transaktionsdaten eine Transaktionsliste von denjenigen Transaktionsdaten erstellt, die auf dem Datenträger zur Abarbeitung registriert sind, und zur Auswahl durch den Benutzer an das Endgerät elektronisch übertragen. Auf diese Weise wird gewährleistet, dass der Benutzer nicht beliebige sondern nur die registrierten Transaktionen beauftragen kann. Die Transaktionsliste wird an das Endgerät übertragen und vorzugsweise auf einer Anzeigeeinrichtung des Endgeräts angezeigt, wo der Benutzer die gewünschten Transaktionsdaten oder deren fest zugeordnete Transaktionsbezeichnung durch Eingabe über eine Eingabevorrichtung auswählen kann.

bei der Erstellung der Transaktionsliste können auch die jeweils wechselseitig verschiedenen Transaktionsidentifikationen erzeugt und eindeutig zugeordnet werden. Diese variablen Transaktionsidentifikationen können regelmäßig, z.B. vor jeder weiteren Transaktion, für die gesamte Transaktionsliste erneuert werden, so dass ein Rückschluss von den ausgewählten Transaktionsdaten auf die jeweilige Transaktionsidentifikation durch Dritte nicht möglich ist. Alternativ kann eine Transaktionsidentifikation auch für bereits ausgewählte Transaktionsdaten oder deren Transaktionsbezeichnung individuell erzeugt werden, nachdem diese nach der Auswahl aus der Transaktionsliste durch den Benutzer von dem Endgerät an den Datenträger elektronisch übertragen wurden.

Ein weiterer Aspekt der vorliegenden Erfindung betrifft die Registrierung von neuen Transaktionsdaten auf dem portablen Datenträger. Hierbei können neu zu registrierende Transaktionsdaten über eine von dem Datenträger auf einer Anzeigeeinrichtung des Endgeräts angezeigte Eingabemaske eingegeben werden. Nach Empfang der eingegebenen zu registrierenden Transaktionsdaten durch den Datenträger erzeugt und überträgt dieser ein Transaktionsakustiksignal an das Endgerät, bei dessen akustischer Wiedergabe zumindest die benutzerspezifische Melodie und die neu zu registrierenden Transaktionsdaten akustisch überlagert wiedergegeben werden. Vorzugsweise wird das Transaktionsakustiksignal derart erzeugt, dass es auch eine individuell erzeugte Transaktionsidentifikation akustisch überlagert wiedergibt, die eindeutig mit den neu zu registrierenden Transaktionsdaten verknüpft ist.

Bei der akustischen Wiedergabe des Transaktionsakustiksignals durch das Endgerät hört der Benutzer die neu zu registrierenden Transaktionsdaten und kann sie gegenüber dem Endgerät bestätigen. Wie auch bei dem oben beschriebenen Freigabeverfahren kann dadurch die korrekte Übermittlung der von dem Benutzer angegebenen neu zu registrierenden Transaktionsdaten von dem Endgerät an den Datenträger verifiziert werden. Sofern das Transaktionsakustiksignal zusätzlich die den zu registrierenden Transaktionsdaten zugeordnete Transaktionsidentifikation akustisch wiedergibt, gibt der Benutzer diese über eine Eingabeeinrichtung des Endgeräts als Bestätigung der benutzerspezifischen Melodie und der zu registrierenden Transaktionsdaten ein. Sofern die von dem Benutzer eingegebene Transaktionsidentifikation mit der von dem Datenträger erzeugten individuellen Transaktionsidentifikation übereinstimmt, werden die über die Eingabemaske eingegebenen Transaktionsdaten auf dem Datenträger für eine zukünftige Abarbeitung durch das Endgerät registriert, zum Beispiel indem sie in eine Transaktionsliste oder Transaktionsdatenbank eingetragen werden.

Wie bei der Abarbeitung von bereits registrierten Transaktionsdaten werden also auch neu zu registrierende Transaktionsdaten nur dann für eine spätere Abarbeitung registriert, wenn der Benutzer die zu registrierenden Transaktionsdaten in der Form bestätigt, wie sie dem Datenträger nach ihrer Angabe durch den Benutzer vorliegen. Durch die zusätzliche Bestätigung der Transaktionsdaten durch Eingabe der entsprechenden Transaktionsidentifikation kann eine Vertrauenswürdigkeit der Datenkommunikationsverbindung verifiziert werden.

Ein zentrales Merkmal der vorliegenden Erfindung ist die Erzeugung von Transaktionsakustiksignalen zur Freigabe oder Registrierung von Transaktionsdaten, die mehrere akustisch überlagerte Akustiksignale umfassen, nämlich das Benutzerakustiksignal mit der benutzerspezifischen Melodie einerseits und Sprachakustiksignale mit ausgewählten oder zu registrierenden Transaktionsdaten oder mit einer Transaktionsidentifikation oder einem Bestätigungscode andererseits. Die benutzerspezifische Melodie repräsentiert hierbei eine von dem Benutzer ausgewählte oder von ihm für diesem Zweck erzeugte Erkennungsmelodie, beispielsweise ein ausgewählte digitalisierte Lieblingsmelodie oder eine von ihm gesungene oder mit einem (digitalen) Instrument aufgezeichnete Melodie. Diese Melodie ist vorzugsweise verfremdet, z.B. durch eine Modulation, ein überlagertes Geräusch oder dergleichen, um einerseits die Individualisierung und den Wiedererkennungseffekt zu verbessern und andererseits die spektrale Analyse des Transaktionsakustiksignals zu erschweren.

Allgemein kann anstelle der benutzerspezifischen Melodie auch ein benutzerspezifisches Hintergrundgeräusch verwendet werden. Das Hintergrundgeräusch sollte vorzugsweise geeignet sein, um vom Benutzer nach der Überlagerung mit dem Transaktionsakustiksignal wieder erkannt zu werden. Zudem sollte es derart überlagert werden, dass durch die Überlagerung ein zusätzliches Hintergrundgeräusch für die akustisch wieder zu gebenden Transaktionsdaten entsteht.

Die einzelnen von dem Endgerät wiederzugebenden Einzelakustiksignale (also das Benutzerakustiksignal und zumindest ein Sprachakustiksignal) werden bei der Erzeugung bzw. Synthetisierung des Transaktionsakustiksignals von der Steuereinrichtung oder einer anderen geeigneten Komponente des Datenträgers vorzugsweise derart akustisch überlagert, dass beispielsweise das Sprachakustiksignal mit den Transaktionsdaten aus dem Transaktionsakustiksignals nicht derart extrahiert werden kann, dass durch eine akustische Wiedergabe eines solchen extrahierten Akustiksignals die Transaktionsdaten separat und akustisch erkennbar wiedergegeben werden können. Eine derartige Analyse der in dem Transaktionsakustiksignal akustisch überlagerten Sprachakustiksignale sowie des überlagerten Benutzerakustiksignals wird insbesondere dadurch verhindert, dass bei der akustischen Wiedergabe des Transaktionsakustiksignals die Wiedergabe des Benutzerakustiksignals einerseits und der etwaigen überlagerten Sprachakustiksignale andererseits im Wesentlichen gleichzeitig beginnt und gleichzeitig endet.

Eine Manipulation des Transaktionsakustiksignals durch einen Dritten wird beispielsweise dadurch ausgeschlossen, dass es nicht möglich ist, das Sprachakustiksignal mit den Transaktionsdaten (oder mit der Transaktionsidentifikation) in dem synthetisierten Transaktionsakustiksignal rückstandsfrei durch ein manipuliertes Sprachakustiksignal mit gefälschten Transaktionsdaten (oder einer gefälschten Transaktionsidentifikation) zu ersetzen, da aufgrund der Komplexität solcher synthetisierter Transaktionsakustiksignale die benutzerspezifische Melodie nicht mit gefälschten Sprachakustiksignalen überlagert werden kann, ohne dass der Benutzer diese Manipulation bei der Wiedergabe der Melodie bemerken würde. Dies ist insbesondere dann möglich, wenn sich das von der benutzerspezifischen Melodie genutzte Frequenzspektrum und das Frequenzspektrum eines überlagerten Sprachakustiksignals derart überlappen, dass lineare Filtertechniken zur manipulativen Analyse des Transaktionsakustiksignals ausgeschlossen werden können, da eine derartige Manipulation eines überlagerten Sprachakustiksignals immer auch eine (hörbare) Beeinträchtigung der benutzerspezifischen Melodie in dem Transaktionsakustiksignal zu Folge hat.

Durch die geschilderte Synthetisierung des Transaktionsakustiksignals wird ebenso verhindert, dass das elektronisch übertragene Transaktionsakustiksignal von einem Dritten manuell oder durch eine auf dem Endgerät installierte Schadsoftware automatisch analysiert wird. Schon gar nicht ist es möglich, dass das Transaktionsakustiksignal in einzelne Silben oder Laute aufgespaltet und daraus ein manipuliertes Sprachakustiksignal zusammengesetzt wird, da dies natürlich auch die gleichzeitig wiedergegebene Melodie für den Benutzer hörbar verfälschen würde. Die Melodie bildet also neben ihrer Funktion als Geheimnis für eine Authentisierung des Benutzers darüber hinaus auch einen Manipulationsschutz für die gleichzeitig wiedergegebenen Sprachakustiksignale mit den Transaktionsdaten oder der Transaktionsidentifikation, da Manipulationen der Sprachakustiksignale immer in der wiedergegebenen Melodie für den Benutzer erkennbar sind.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Fig.1: ein erfindungsgemäßes Transaktionssystem umfassend einen erfindungsgemäßen portablen Datenträger sowie ein Endgerät;
- Fig. 2: ein erfindungsgemäßes Verfahren zur Freigabe von Transaktionsdaten in dem Transaktionssystem gemäß Fig. 1;
- Fig. 2a: eine erste Ausführungsvariante des Verfahrens zur Freigabe von Transaktionsdaten gemäß Fig. 2; und
- Fig. 2b: eine zweite Ausführungsvariante des Verfahrens zur Freigabe von Transaktionsdaten gemäß Fig. 2;
- Fig. 3: ein Verfahren zur Registrierung von Transaktionsdaten in dem Transaktionssystem gemäß Fig. 1; und
- Fig. 3a: eine Ausführungvariante des Verfahrens zur Registrierung von Transaktionsdaten gemäß Fig. 3.

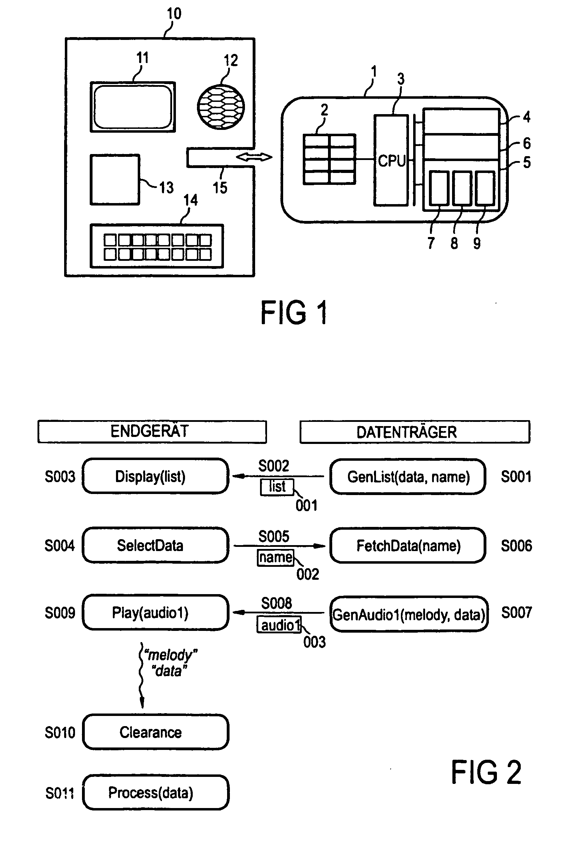

Fig.1 zeigt ein Transaktionssystem bestehend aus einem portablen Datenträger 1 und einem Endgerät 10. Der portable Datenträger 1 kann ein beliebiger tragbarer Datenträger sein, beispielsweise eine Chipkarte, ein USB-Speichermedium, eine sichere Multimediakarte, eine in ein Mobilfunkendgerät eingelegte Mobilfunkkarte oder dergleichen, der mit einer Datenkommunikationsschnittstelle 2 zur Datenkommunikation mit einer korrespondierenden Schnittstelle 15 des Endgeräts 10 sowie mit einem Prozessor 3 (CPU) zum Ausführen von Applikationsprogrammen ausgestattet ist. Ferner umfasst der Datenträger 1 eine Speicheranordnung bestehend aus einem RAM-Arbeitsspeicher 4, einem wiederbeschreibbaren Flash- oder EEPROM-Speicher 5 sowie einem permanenten ROM-Speicher 6. Des Weiteren kann der Datenträger 1 neben der Kontaktschnittstelle 2 weitere Schnittstellen für eine Datenkommunikation mit dem Endgerät 10 oder einem Transaktionsserver aufweisen, z.B. eine kontaktlose Schnittstelle in Form einer Antenne.

Das Endgerät 10 kann ein beliebiges Transaktions- oder Datenterminal, ein Verkaufsautomat, ein Bankterminal, ein Computer, wie z.B. ein Personalcomputer oder ein tragbarer Laptop, ein Mobilfunkendgerät, ein persönlicher digitaler Assistent (PDA) oder dergleichen sein, das zur Freigabe von Transaktionsdaten auf Veranlassung des Datenträgers 1 eine Steuereinrichtung 13 umfasst. Zusätzlich umfasst das Endgerät 10 eine Datenkommunikationsschnittstelle 15 zur Datenkommunikation mit dem portablen Datenträger 1 und kann an ein Datenkommunikationsnetzwerk angeschlossen sein, beispielsweise an das Internet oder ein firmenweites Netzwerk. Abhängig von dem Typ und den Aufgaben des Endgeräts 10 kann die Steuereinrichtung 13 freigegebene Transaktionsdaten direkt abarbeiten, z.B. bei einer Barauszahlung an einem Bankterminal.

Zur Freigabe von Transaktionsdaten stellt ein Benutzer des Datenträgers 1 eine Datenkommunikationsverbindung zwischen dem Datenträger 1 und dem Endgerät 10 her, um über eine Eingabeeinrichtung 14 und eine optische Anzeigeeinrichtung 11, z.B. eine Tastatur und ein Bildschirm, und eine akustische Wiedergabeeinrichtung 12, z.B. ein Lautsprecher oder Kopfhörerausgang, die gewünschte Transaktion bzw. die betreffenden Transaktionsdaten auszuwählen und deren Abarbeitung zu veranlassen.

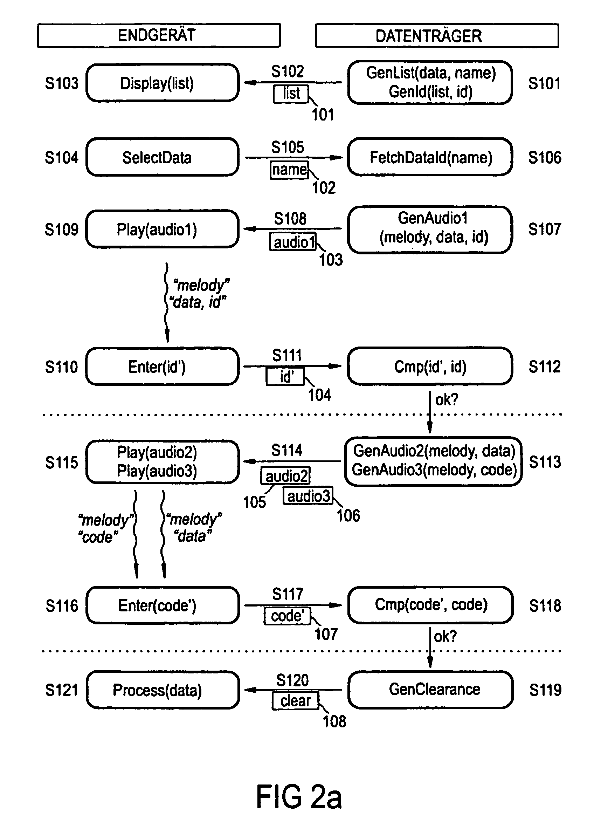

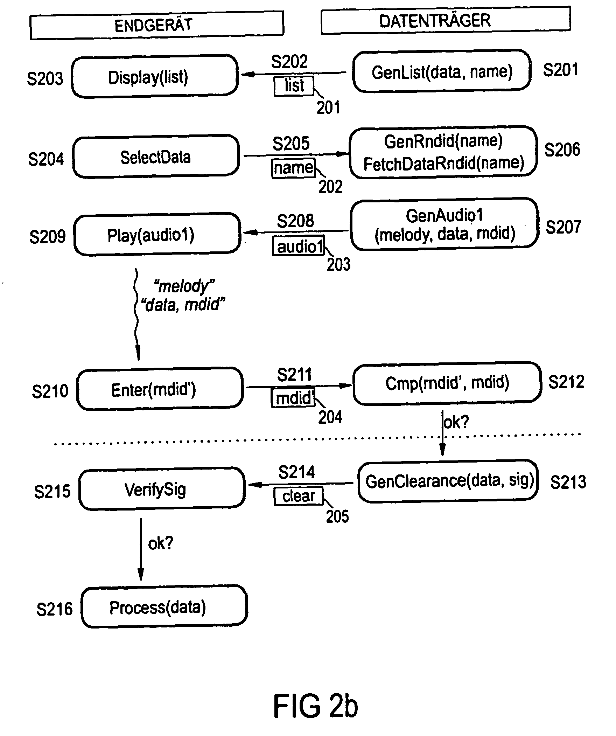

Die Abarbeitung von freigegebenen Transaktionsdaten kann auch von einem weiteren Client- oder Serverrechner in Interaktion mit dem Datenträger 1 vorgenommen werden, der über das Datenkommunikationsnetzwerk für das Endgerät 10 bzw. für den Datenträger 1 erreichbar ist, z.B. bei einem Online-Banking Auftrag, der mit dem Datenträger 1 veranlasst und schließlich von einem Transaktionsserver in einem Rechenzentrum einer Bank ausgeführt wird. In diesem Fall fungiert das Endgerät 10 als einfaches optisches/akustisches Wiedergabeendgerät, das im wesentlichen lediglich die Anzeigeeinrichtung 11, die Wiedergabeeinrichtung 12, die Eingabeeinrichtung 14 und die Datenkommunikationsschnittstelle 15 umfasst, aber keine weiteren Einrichtungen und Ressourcen zur Abarbeitung von freigegebenen Transaktionsdaten. Ein solches Wiedergabeendgerät führt dann als reines Ein-/ Ausgabegerät, das dem Datenträger lediglich weitere Kommunikationsschnittstellen zur Verfügung stellt, die nachfolgend im Zusammenhang mit den Figuren 2, 2a und 2b beschriebenen Freigabeverfahren in Interaktion mit den Datenträger 1 durch, während es für die Abarbeitung von freigegebenen Transaktionsdaten lediglich eine Datenkommunikationsverbindung zu einem Transaktionsclient/ -server bereitstellt, der die eigentliche Transaktion durchgeführt.

Im Zusammenhang mit der vorliegenden Erfindung kann eine Transaktion beispielsweise eine von dem Endgerät 10 oder von einem weiteren Transaktionsclient/-server durchgeführte Finanztransaktion sein, z.B. eine durch Transaktionsdaten bestimmte Überweisung oder Auszahlung von Bargeld, oder eine beliebige andere Datentransaktion, zum Beispiel ein Download von kommerziellen Mediendaten von einem Server oder dergleichen. Ebenso kann eine Transaktion eine beliebige andere durch den Benutzer zu veranlassende Operation des Endgeräts 10 oder eines für den Datenträger zugänglichen Transaktionsclients/-servers darstellen, zum Beispiel eine gewünschte Datenmanipulation, wie z.B. eine Ver- oder Entschlüsselung von Daten, einen Kommunikationsauftrag, z.B. eine E-Mail oder eine SMS, eine Datenfreigabe oder dergleichen.

In dem Flash-Speicher 5 des Datenträgers 1 liegen verschiedene von dem Prozessor 3 ausführbare Applikationsprogramme und Daten zur Realisierung der Datenkommunikation mit dem Endgerät 10, nämlich zumindest eine Steuereinrichtung 7, die die Datenkommunikation mit dem Endgerät 10 steuert und die erforderlichen Daten erzeugt und bearbeitet, ein digitales Benutzerakustiksignal 8, bei dessen akustischer Wiedergabe eine dem Benutzer des Datenträgers 1 bekannte und für ihn spezifische Melodie wiedergegeben wird, sowie registrierte Transaktionsdaten 9, die von dem Benutzer prinzipiell auswählbare und von dem Endgeräts 10 oder einem Transaktionsserver durchführbare Transaktionen definieren, z.B. in Form einer Transaktionsliste oder einer Transaktionsdatenbank. Das Benutzerakustiksignal 8 kann in einem beliebigen geeigneten digitalen Datenformat vorliegen, das von einer Soundkarte oder einer sonstigen akustischen Wiedergabeeinrichtung 12 des Endgeräts 10 akustisch wiedergegeben werden kann, zum Beispiel als MP3-Datei, WAV-Datei oder als eine sonstige geeignete digitale Audiodatei.

Die von dem Benutzerakustiksignal 8 wiedergegebene benutzerspezifische Melodie kann eine beliebige von dem Benutzer ausgewählte Melodie sein, die vorzugsweise einen hinreichenden Wiedererkennungseffekt besitzt und darüber hinaus vorzugsweise eine möglichst gute Individualisierung bzw. Personalisierung des Datenträgers auf den Benutzer erlaubt. Die benutzerspezifische Melodie kann beispielsweise eine Lieblingsmelodie oder eine andere populäre Melodie sein, die der Benutzer aus einer entsprechenden Auswahl, z.B. im Internet, auswählt oder anderweitig bestimmt, z.B. durch Vorsingen, Vorsummen oder Vorspielen auf einem geeigneten (digitalen) Instrument. Zusätzlich kann die benutzerspezifische Melodie durch Geräusche oder andere Audioeffekte, wie z.B. eine Modulation, verfremdet werden, um eine weitergehende Individualisierung zu erreichen und eine Manipulation des Benutzerakustiksignals 8 zu erschweren.

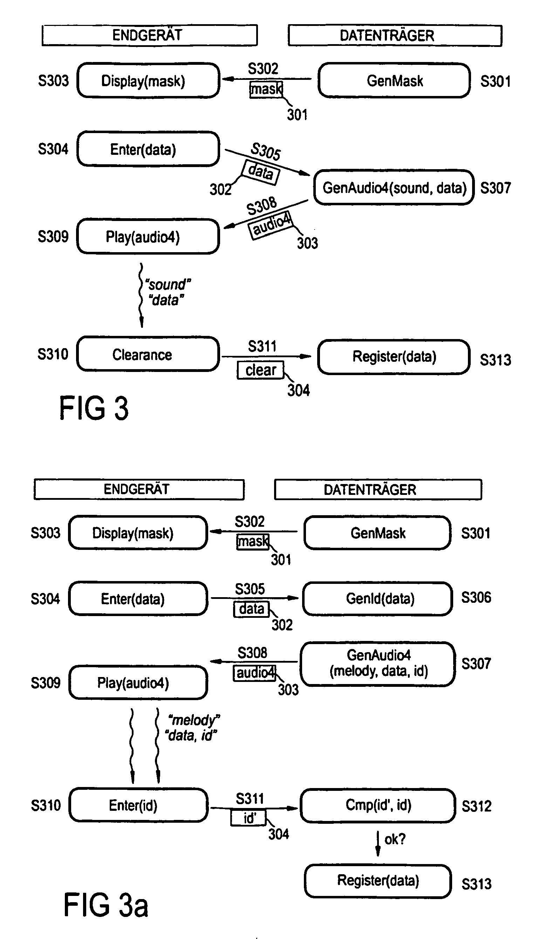

Es bietet sich an, das Benutzerakustiksignal 8 mit der digitalisierten benutzerspezifischen Melodie bei ohnehin personalisierten Datenträgern 1, wie z.B. Chipkarten, SmartCards oder Mobilfunkkarten, bereits bei der Personalisierung durch den Datenträgerherausgeber, z.B. einem Kreditinstitut oder einem Mobilfunkbetreiber, in den Datenträger 1 einzuschreiben. Der Benutzer gibt dem Datenträgerherausgeber dann z.B. seine Lieblingsmelodie bekannt, z.B. in Form einer MP3-Datei, welche dann bei der Personalisierung als digitales Benutzerakustiksignal 8 in den Flash-Speicher 5 eingeschrieben wird. Im Rahmen der Personalisierung kann auch eine etwaige Verfremdung der benutzerspezifischen Melodie z.B. gemäß der Vorgaben des Benutzers, vorgenommen werden. Ebenso können mehrere Benutzerakustiksignale 8 mit verschiedenen benutzerspezifischen Melodien in den Datenträger 1 ein-gespielt werden, wobei die für eine Transaktionsfreigabe (vgl. Fig. 2, 2a, 2b) oder eine Transaktionsregistrierung (vgl. Fig. 3, 3a) von dem Datenträger 1 jeweils zu verwendenden Melodien (bzw. die entsprechenden Benutzerakustiksignale 8) dann jeweils aktuell bestimmt werden können, z.B. durch eine zufällige Auswahl durch den Datenträger 1 oder eine aktive Auswahl des Benutzers, oder nach einem sonstigen geeigneten Schema.

In den Figuren 2, 2a und 2b ist die Abarbeitung der freigegebenen Transaktionsdaten der Einfachheit halber jeweils als ein von dem Endgerät 10 auszuführender Verfahrensschritt S011, S121, S216 angegeben. Wie bereits erläutert, muss dies nicht zwingend der Fall sein, sondern die Abarbeitungsschritte S011, S121, S216 können ebenso gut von einem Transaktionsserver ausgeführt werden, der über ein Datenkommunikationsnetzwerk mit dem Endgerät 10 oder dem Datenträger 1 verbunden ist. Insofern sind die Abarbeitungsschritte S011, S121, S216 so zu verstehen, dass die Abarbeitung auch durch einen entfernten Transaktionsserver oder durch den Datenträger selbst erfolgen kann.

Fig. 2 illustriert anhand des Transaktionssystems der Fig.1 eine bevorzugte Ausführungsform eines Verfahrens zur Freigabe von Transaktionsdaten gegenüber dem Endgerät 10 durch einen Benutzer des Datenträgers 1. Hierbei erzeugt der Datenträger 1 in Schritt S001 eine Transaktionsliste 001 (list), in der registrierte Transaktionsdaten (data) jeweils einer Transaktionsbezeichnung 002 (name) zugeordnet werden (GenList(data, name)). Die Transaktionsbezeichnung 002 dient hierbei als eindeutige Adressierung beziehungsweise Indizierung der in der Transaktionsliste 001 verzeichneten Transaktionsdaten und bleibt während der Existenz der Transaktionsdaten vorzugsweise unverändert. Die derart erzeugte Transaktionsliste 001 wird dann in Schritt S002 an das Endgerät 10 elektronisch übertragen und in Schritt S003 auf der Anzeigeeinrichtung 11 des Endgeräts 10 angezeigt (Display(list)).

In Schritt S004 wählt der Benutzer die Transaktionsdaten der von ihm gewünschten Transaktion aus der angezeigten Transaktionsdatenliste 001 aus (SelectData), beispielsweise indem er die feste Transaktionsbezeichnung 002 der gewünschten Transaktionsdaten über die Eingabeeinrichtung 14 eingibt. Die eingegebene Transaktionsbezeichnung 002 wird dann in Schritt S005 an den Datenträger 1 elektronisch übertragen. In Schritt S006 ermittelt die Steuereinrichtung 7 die der elektronisch empfangenen Transaktionsbezeichnung 002 zugeordneten Transaktionsdaten anhand der z.B. in dem Flash-Speicher 5 abgelegten Transaktionsliste 001 (FetchData(name)).

In Schritt S007 wird von der Steuereinrichtung 7 aus dem die benutzerspezifische Melodie (melody) wiedergebenden, im Flash-Speicher 5 abgespeicherten Benutzerakustiksignal 8 ein digitales Transaktionsakustiksignal 003 (audio1) erzeugt, indem zunächst die in Schritt S006 aus der Transaktionsliste 001 entnommenen Transaktionsdaten, die ja bisher lediglich in Textform vorliegen, in ein digitales Sprachaudiosignal gewandelt werden, welches anschließend mit dem in dem Flash-Speicher 5 vorliegenden Benutzerakustiksignal 8 akustisch überlagert wird, um auf diese Weise ein Transaktionsakustiksignal 003 zu erzeugen (GenAudio1(melody, data)), bei dessen akustischer Wiedergabe die gewandelten Transaktionsdaten mit der benutzerspezifischen Melodie akustisch überlagert wiedergegeben werden.

In dem so erzeugten Transaktionsakustiksignal 003 sind die benutzerspezifische Melodie und das Sprachakustiksignal der Transaktionsdaten derart miteinander verknüpft, dass daraus kein Akustiksignal extrahiert werden kann, das entweder nur die benutzerspezifische Melodie oder nur die Transaktionsdaten akustisch wiedergibt. Insbesondere sind die benutzerspezifische Melodie und das Sprachakustiksignal der Transaktionsdaten derart miteinander verknüpft, dass beide bei einer akustischen Wiedergabe des Transaktionsakustiksignals 003 im wesentlichen gleichzeitig beginnen und enden. Das erzeugte Transaktionsakustiksignal 003 wird dann in Schritt S008 an das Endgerät 10 übertragen und dort in Schritt S009 akustisch wiedergegeben (Play(audio1)).

Abschließend erteilt der Benutzer in Schritt S010 die Freigabe der Transaktionsdaten (Clearance), sofern er bei der Wiedergabe des Transaktionsakustiksignals 003 in Schritt S004 einerseits eine zumindest teilweise Übereinstimmung der akustisch wiedergegebenen Melodie mit der benutzerspezifischen Melodie und andererseits eine Übereinstimmung der akustisch wiedergegebenen Transaktionsdaten mit den von dem Benutzer im Schritt S004 ausgewählten Transaktionsdaten feststellen kann. Durch eine korrekte Wiedergabe der dem Benutzer bekannten Melodie und der von ihm ausgewählten Transaktionsdaten erkennt der Benutzer, dass die Datenkommunikationsverbindung zwischen seinem Datenträger 1 und dem Endgerät 10 sowie das Endgerät selbst unmanipuliert und insofern vertrauenswürdig sind. Der Benutzer kann damit sicher sein, dass die von ihm in Schritt S004 ausgewählten Transaktionsdaten korrekt bei dem Datenträger 1 angekommen sind.

Die Freigabe in Schritt S010 kann beispielsweise durch Eingabe eines vorgegebenen Freigabetexts über die Eingabeeinrichtung 14 oder durch einen bestimmten Tastendruck oder eine sonstige einseitige Handlung des Benutzers gegenüber dem Endgerät 10 erfolgen, woraufhin die Transaktionsdaten schließlich in Schritt S011 abgearbeitet werden (Process(data)).

Fig. 2a illustriert eine Verfahrensvariante des in Fig. 2 gezeigten Freigabeverfahrens bei der unter anderem die im Schritt S010 der Fig. 2 gezeigte Freigabeerteilung (entspricht Schritt S112 in Fig. 2a) durch den Benutzer nochmals datenträgerseitig verifiziert wird. Dementsprechend bilden die Schritte S101 bis S112 einen ersten Verfahrensteil bis zur Freigabeerteilung gegenüber dem Endgerät 10, während die Schritte S113 bis S121 einen zweiten Verfahrensteil repräsentieren, der die Verifikation bzw. Bestätigung der Freigabeerteilung basierend auf einer in Schritt S101 erzeugten Transaktionsidentifikation betrifft.

Analog zum Schritt S001 der Fig. 2 erzeugt der Datenträger 1 in Schritt S101 wieder eine Transaktionsliste 101 (list) mit den registrierten Transaktionsdaten und deren zugeordneten Transaktionsbezeichnungen 102 (GenList(data, name)). Des Weiteren wird in Schritt S101 jedem Transaktionsdatensatz bzw. jeder Transaktionsbezeichnung 102 eine individuelle und eindeutige Transaktionsidentifikation (id) zugeordnet (GenId(list, id)), so dass jedem in der Transaktionsliste 101 verzeichneten Transaktionsdatensatz einerseits eine feste Transaktionsbezeichnung 102 und andererseits eine variable Transaktionsidentifikation eindeutig zugeordnet ist. Die Transaktionsidentifikationen können beispielsweise regelmäßig oder jeweils bei Erzeugung einer aktuellen Transaktionsdatenliste neu erzeugt und den jeweiligen Transaktionsdaten individuell zugeordnet werden, um einer Manipulation des Verfahrens durch Ausspähen von Transaktionsidentifikationen vorzubeugen.

Die Schritte S102 bis S105 der Fig. 2a verlaufen analog zu den Schritten S002 bis S005 der Fig. 2, d.h. die erzeugte Transaktionsliste 101 wird an das Endgerät 10 elektronisch übertragen (S102) und dort angezeigt (S103), woraufhin der Benutzer die gewünschten Transaktionsdaten auswählt (S104) und die dazu eingegebene Transaktionsbezeicnnung 102 an den Dateinträger 1 elektronisch übertragen wird (S105).

In Schritt S106 ermittelt die Steuereinrichtung 7 anhand der elektronisch empfangenen Transaktionsbezeichnung 102 die ausgewählten Transaktionsdaten und die diesen zugeordnete variable Transaktionsidentifikation (FetchDataId(name)).

In Schritt S107 wird von der Steuereinrichtung 7 basierend auf dem im Flash-Speicher 5 abgespeicherten Benutzerakustiksignal 8 ein digitales Transaktionsakustiksignal 103 (audio1) erzeugt, das die benutzerspezifische Melodie und je ein Sprachakustiksignal mit den gewandelten Transaktionsdaten und mit der gewandelten Transaktionsidentifikation akustisch überlagert wiedergibt (GenAudio1(melody, data, id)). Das erzeugte Transaktionsakustiksignal 103 wird dann in Schritt S108 an das Endgerät 10 übertragen und dort in Schritt S109 akustisch wiedergegeben (Play(audio1)).

Bei der akustischen Wiedergabe des Transaktionsakustiksignals 103 in Schritt S109 hört der Benutzer des Datenträgers 1 also ein Sprachakustiksignal mit den Transaktionsdaten und ein Sprachakustiksignal mit der Transaktionsidentifikation akustisch überlagert mit der benutzerspezifischen Melodie. Daraufhin gibt der Benutzer in Schritt S110 die von ihm erkannte, akustisch wiedergegebene Transaktionsidentifikation 104 (id') über die Eingabeeinrichtung 14 in das Endgerät 10 ein (Enter(id')), sofern er eine zumindest teilweise Übereinstimmung der wiedergegebenen Melodie mit der benutzerspezifischen Melodie sowie eine Übereinstimmung der wiedergegebenen Transaktionsdaten mit den von ihm ausgewählten Transaktionsdaten feststellt. Das Eingeben der akustisch wiedergegebenen Transaktionsidentifikation 104 repräsentiert insofern die Freigabeerteilung durch den Benutzer, der damit bestätigt dass der Datenträger 1 die ausgewählten Transaktionsdaten in Schritt S105 korrekt und unmanipuliert von dem Endgerät 10 empfangen hat.

Die eingegebene Transaktionsidentifikation 104 wird anschließend in Schritt S111 an den Datenträger 1 elektronisch übertragen, woraufhin dieser in Schritt S112 die von dem Benutzer eingegebene Transaktionsidentifikation 104 mit der von dem Datenträger 1 in Schritt S101 erzeugten Transaktionsidentifikation vergleicht (Cmp(id', id)). Sofern bei diesem Vergleich eine Übereinstimmung der eingegebenen und der erzeugten Transaktionsidentifikation festgestellt wird, gilt die Datenkommunikationsverbindung zwischen dem unsicheren Endgerät 10 und den portablen Datenträger 1 sowie das Endgerät 10 selbst als vertrauenswürdig.

In den folgenden Schritten S113 bis S121 wird die Freigabe durch den Benutzer noch einmal verifiziert und schließlich eine Abarbeitung der ausgewählten Transaktionsdaten veranlasst. Hierbei kann eine erweiterte Freigabeverifikation die skizzierten Schritte S113 bis S121 umfassen, während eine vereinfachte Freigabebestätigung auch nur die Schritte S119 bis S121 umfassen kann. Im letzteren Fall könnte auf den Schritt S112 auch sofort der Schritt S119 folgen.

Bei der in Fig. 2a skizzierten Freigabeerteilung werden in Schritt S113 zwei digitale Akustiksignale 105 (audio2) und 106 (audio3) erzeugt (GenAudio2(melody, data); GenAudio3(melody, code)), wobei eines der Akustiksignale 105 die von dem Benutzer ausgewählten Transaktionsdaten als Sprachakustiksignal akustisch überlagert mit der benutzerspezifischen Melodie wiedergibt und das andere Akustiksignal 106 einen Freigabecode (code) als Sprachakustiksignal akustisch überlagert mit der benutzerspezifischen Melodie wiedergibt. Letzteres wird nachfolgend auch als Freigabeakustiksignal bezeichnet. Alternativ kann auch ein gemeinsames Freigabeakustiksignal erzeugt werden (ähnlich wie in Schritt S107), das sowohl ein Sprachakustiksignal der Transaktionsdaten als auch des Freigabecodes akustisch überlagert mit der benutzerspezifischen Melodie unterscheidbar wahrnehmbar wiedergibt. Andererseits kann auf das Akustiksignal 105 auch verzichtet werden, da die akustische Wiedergabe der Transaktionsdaten bereits in den Schritten S107 bis S109 erfolgt ist und an dieser Stelle lediglich der erneuten Kontrolle durch den Benutzer dient. Der Freigabecode kann hierbei eine willkürliche Information sein, beispielsweise eine zufällige Zahlen- oder Zeichenfolge oder ein Wort, das dem Benutzer zu diesem Zeitpunkt nicht bekannt ist.

In Schritt S115 werden die beiden Akustiksignale 105,106 über die Wiedergabeeinrichtung 12 des Endgeräts 10 wiedergegeben (Play(audio2); Play(audio3)), so dass dem Benutzer die ihm bekannte, benutzerspezifische Melodie sowie im wesentlichen gleichzeitig der ihm bis dahin unbekannte Freigabecode zu Gehör gebracht wird und optional zur Kontrolle auch die Transaktionsdaten. Die endgültige Freigabe der Abarbeitung der Transaktionsdaten wird dann in Schritt S116 dadurch eingeleitet, dass der Benutzer den von ihm infolge der akustischen Wiedergabe erkannten Freigabecode 107 (code') über die Eingabeeinrichtung 14 eingibt (Enter(code')), dieser in Schritt S117 an den Datenträger 1 übertragen und dort mit dem in Schritt S113 erzeugten Freigabecode in Schritt S118 verglichen wird (Cmp(code', code)). Sofern dieser Vergleich ein positives Ergebnis erbringt, erzeugt der Datenträger 1 in Schritt S119 (GenClearance) ein Freigabesignal 108 (clear) und sendet dieses in Schritt S120 an das Endgerät 10, woraufhin die Transaktionsdaten schließlich in Schritt S121 abgearbeitet werden (Process(data)) und die Transaktion dadurch ausgeführt wird. Hierbei kann das in Schritt S119 erzeugte Freigabesignal 108 beispielsweise dem in Schritt S113 erzeugten Freigabecode entsprechen bzw. ihn umfassen oder ein beliebiges anderes Bestätigungssignal sein, in das weitere Daten integriert sind, z.B. erneut die abzuarbeitenden Transaktionsdaten, eine kryptographische Signatur oder dergleichen.

Fig. 2b illustriert eine weitere Ausführungsvariante des Verfahrens zur Freigabe von Transaktionsdaten gemäß Fig. 2, wobei wiederum die Schritte S201 bis S212 einen ersten Verfahrensteil bis zur Freigabeerteilung gegenüber dem Endgerät 10 repräsentieren und mit den Schritten S213 bis S216 die Freigabeerteilung durch den Datenträger 1 bestätigt wird.

Die Schritte S201 bis S212 der Fig. 2b verlaufen weitgehend analog zu den Schritten S101 bis S112 der Fig. 2a. In Schritt S201 wird eine Transaktionsliste 201 (list) aus registrierten Transaktionsdaten (data) und deren fest zugeordneten Transaktionsbezeichnungen 202 (name) erzeugt (GenList(data, name)) und in Schritt S202 an das Endgerät 10 zur Anzeige auf einer Anzeigeeinrichtung 11 in Schritt S203 gesendet (Display(list)). In Schritt S204 wählt der Benutzer die gewünschten Transaktionsdaten anhand der zugeordneten Transaktionsbezeichnung 202 aus (SelectData), welche dann in Schritt S205 an den Datenträger 1 geschickt wird.

Abweichend von den Schritten S101 und S106 der Fig. 2a wird die individuelle Transaktionsidentifikation bei dem Verfahren gemäß Fig. 2b erst nach dem Empfang der Transaktionsbezeichnung 202 der ausgewählten Transaktionsdaten in Schritt S206 (und nicht wie in Fig. 2a bereits im Schritt S201 für die gesamte Transaktionsliste) als Zufallszahl oder zufällige Zeichenkette individuell erzeugt (GenRndid(name)). Weiterhin werden in Schritt S206 die Transaktionsdaten und die zugehörige Transaktionsidentifikation für die anschließende Erzeugung des Transaktionsakustiksignals 103 bereitgestellt (FetchDataRndid(name)).

In Schritt S207 wird dann das Transaktionsakustiksignal 203 (audio1) erzeugt, das die ausgewählten Transaktionsdaten sowie die gerade erzeugte Transaktionsidentifikation als Sprachakustiksignale mit der benutzerspezifischen Melodie akustisch überlagert wiedergibt (GenAudio1(melody, data, rndid)), welches dann in Schritt S208 an das Endgerät 10 gesendet und dort in Schritt S209 über die Wiedergabeeinrichtung 12 wiedergegeben wird (Play(audio1)). Der Benutzer bestätigt in Schritt S210 die zumindest teilweise Übereinstimmung der von dem Endgerät 10 wiedergegebenen Melodie mit der ihm bekannten benutzerspezifischen Melodie sowie die Übereinstimmung der wiedergegebenen Transaktionsdaten mit den ausgewählten Transaktionsdaten, indem er die erkannte zufällige Transaktionsidentifikation 204 (rndid') in das Endgerät 10 eingibt (Enter(rndid')), welche in Schritt S211 an den Datenträger 1 übertragen und dort in Schritt S212 mit der in Schritt S206 erzeugten Transaktionsidentifikation verglichen wird.

Im Falle eines positiven Vergleichsergebnisses in Schritt S212 wird in Schritt S213 ein Freigabedatensignal 205 (clear) erzeugt, das zumindest die ausgewählten Transaktionsdaten umfasst, vorzugsweise jedoch zusätzlich eine mit einem geeigneten (privaten) Signaturschlüssel erzeugte kryptographische Signatur (sig) des Benutzers beziehungsweise des Datenträgers 1 (GenClearance(data, sig)). Nach dem Empfang des Freigabedatensignals 205 prüft das Endgerät 10 in Schritt S215 die Signatur (VerifySig), beispielsweise mit einem zu dem Signaturschlüssel korrespondierenden (öffentlichen) Verifikationsschlüssel, woraufhin schließlich die Transaktion in Schritt S216 durch Abarbeiten der ausgewählten Transaktionsdaten ausgeführt wird (Process(data)).

Im Gegensatz zu dem Freigabeverfahren gemäß Fig. 2 wird bei den Freigabeverfahren gemäß Fig. 2a und 2b von dem Datenträger 1 jeweils eine unbekannte und mit den ausgewählten Transaktionsdaten eindeutig verknüpfte Transaktionsidentifikation erzeugt (Schritt S101 bzw. S206), die von dem Endgerät 10 akustisch wiedergegeben wird (Schritt S109 bzw. S209). Während bei dem Freigabeverfahren gemäß Fig. 2 die Freigabebestätigung lediglich durch eine einseitige und immer gleiche Bestätigung durch den Benutzer erfolgt (Schritt S010), z.B. durch Drücken eines Freigabeknopfs an dem Endgerät 10, kann bei den Freigabeverfahren gemäß Fig. 2a und 2b eine komplexere Freigabeverifikation bzw. -bestätigung basierend auf der unbekannten und transaktionsindividuellen Transaktionsidentifikation erfolgen, die mit der Eingabe der wiedergegebenen Transaktionsidentifikation 104, 204 durch den Benutzer (Schritt S110 bzw. S210) und der Überprüfung der eingegebenen Transaktionsidentifikation 104, 204 durch den Datenträger 1 eingeleitet wird (Schritt S112 bzw. S212).

Bei den in Fig. 2a und 2b skizzierten Verfahren ist es deshalb ohne weiteres möglich, die Verfahrensteile zur Freigabeverifikation bzw. -bestätigung (in Fig. 2a die Schritte S113 bis S21 bzw. S119 bis S121 und in Fig. 2b die Schritte S213 bis S216) auszutauschen oder zu kombinieren. Ebenso ist es möglich, bei der Freigabeverifikation nach Fig. 2a die Schritte S113 bis S116 zu übergehen und nach der Überprüfung der eingegebenen Transaktionsidentifikation 104 in Schritt S112 sofort das Freigabesignal 108 gemäß Schritt S119 zu erzeugen. Weiterhin ist es auch möglich, nach der Freigabeverifikation mit den Schritten S113 bis S118 der Fig. 2a anstelle der Freigabebestätigung durch die Schritte S119 bis S121 eine alternative Freigabebestätigung durch die Schritte S213 bis S216 vorzusehen.

Fig. 3 illustriert schließlich ein Verfahren zum Registrieren von Transaktionsdaten auf dem Datenträger 1, die eine von dem Benutzer gewünschte, bisher nicht mögliche Transaktion auf dem Endgerät 10 definieren. Dazu erzeugt der Datenträger 1 in Schritt S301 eine Eingabemaske 301 (mask) zur Eingabe der Transaktionsdaten 302 (GenMask), die in Schritt S302 an das Endgerät 10 übertragen und dort in Schritt S303 auf der Anzeigeeinrichtung 11 angezeigt wird (Display(mask)). Der Benutzer gibt die gewünschten Transaktionsdaten 302 in Schritt S304 in die angezeigte Eingabemaske 301 ein (Enter(data)) und der Datenträger 1 nimmt die eingegebenen Transaktionsdaten 302 in Schritt S305 entgegen.

In Schritt S307 wird ein Transaktionsakustiksignal 303 (audio4) erzeugt, das ein Sprachakustiksignal der (gewandelten) neu zu registrierenden Transaktionsdaten 302 mit der benutzerspezifischen Melodie akustisch überlagert wiedergibt (GenAudio4(melody, data)). Das Transaktionsakustiksignal 303 wird in Schritt S308 an das Endgerät 10 übertragen und dort in Schritt S309 wiedergegeben (Play(audio4)). Der Benutzer bestätigt dann in Schritt S310 durch einen Tastendruck oder eine sonstige einseitige, gleichbleibende Bestätigung gegenüber den Endgerät 10 (Clearance), dass die wiedergegebene Melodie und die wiedergegebenen Transaktionsdaten jeweils der benutzerspezifischen Melodie und den in Schritt S304 angegebenen neu zu registrierenden Transaktionsdaten 302 entsprechen. Daraufhin wird in Schritt S311 ein Registrierungsbestätigungssignal 304 (clear) an den Datenträger 1 gesendet, der die Transaktionsdaten 302 schließlich in Schritt S313 registriert, z.B. indem sie in eine Transaktionsdatenbank eingetragen werden, auf deren Grundlage die Transaktionsliste in den Schritten S001, S101 oder S201 der Fig. 2, 2a oder 2b erzeugt wird. An das Registrierungsverfahren nach Fig. 3 kann sich dann ein Freigabeverfahren gemäß den Figuren 2, 2a oder 2b zur Abarbeitung der nunmehr registrierten Transaktionsdaten 302 anschließen.

Fig. 3a illustriert eine Verfahrensvariante des Registrierungsverfahrens der Fig. 2a, bei dem eine Transaktionsidentifikation nach dem gleichen Prinzip zur Registrierungsbestätigung eingesetzt wird, wie in Fig. 2a und 2b zur Freigabebestätigung. Dabei sind die Schritte S301 bis S305 analog zu Fig. 3.

In Abweichung von dem Verfahren gemäß Fig. 3 wird bei dem in Fig. 3a illustrierten Verfahren in Schritt S306 eine individuelle Transaktionsidentifikation erzeugt und den eingegebenen Transaktionsdaten 302 eindeutig zugeordnet (GenId(data)). In Schritt S307 wird dann ein Transaktionsakustiksignal 303 (audio4) erzeugt, das ein Sprachakustiksignal der eingegebenen Transaktionsdaten 302 und ein Sprachakustiksignal der in Schritt S306 zugewiesenen Transaktionsidentifikation mit der benutzerspezifischen Melodie akustisch überlagert wiedergibt (GenAudio4(melody, data id)). Nach der in Schritt S309 erfolgten Wiedergabe des an das Endgerät 10 in Schritt S308 übertragenen Transaktionsakustiksignals 303 (Play(audio4)), bestätigt der Benutzer dann in Schritt S310, dass die wiedergegebene Melodie der ihm bekannten benutzerspezifischen Melodie zumindest teilweise entspricht und dass die wiedergegebenen Transaktionsdaten mit den von ihm eingegebenen neu zu registrierenden Transaktionsdaten 302 übereinstimmen, indem der Benutzer die ebenfalls wiedergegebene und von ihm erkannte Transaktionsidentifikation 304 (id') in die Eingabeeinrichtung 14 des Endgeräts 10 eingibt (Enter(id')). Die eingegebenen Transaktionsidentifikation 304 wird in Schritt S311 an den Datenträger 1 übertragen.

Sofern der Datenträger schließlich in Schritt S312 eine Übereinstimmung zwischen der eingegebenen Transaktionsidentifikation 304 und der in Schritt S306 erzeugten Transaktionsidentifikation für die neu zu registrierenden Transaktionsdaten 302 feststellt, werden die Transaktionsdaten 302 schließlich in Schritt S313 von dem Datenträger 1 registriert.

Zur weiteren Individualisierung des Transaktionsakustiksignals kann zusätzlich zu der benutzerspezifischen Melodie des Benutzerakustiksignals 8 auch das Sprachakustiksignal mit den Transaktionsdaten und/oder der Transaktionsidentifikation und/oder dem Freigabecode benutzerindividualisiert werden, z.B. indem bei der akustischen Wandlung der jeweiligen Zeichen-/Textsequenz die Stimme des Benutzer oder sonstige individualisierende akustische Effekte berücksichtig werden. So kann beispielsweise eine Rezitierung (z.B. Vorlesen oder Vorsingen) der betreffenden Zeichen-/Textsequenz durch den Benutzer aufgezeichnet werden.

Zur Erhöhung der Datenmanipulationssicherheit insbesondere bei der Übertragung von akustisch wiedergegebenen und von dem Benutzer in das Endgerät 10 eingegebenen Akustikinformationen in den Schritten S111, S117, S211 und S311 ist es denkbar, die entsprechende Textinformation (also z.B. die Transaktionsidentifikation 104, 205, 304 in Schritt S111, S214, S311 oder der Freigabecode in Schritt S117) verschleiert zu übertragen. Dies kann beispielsweise durch eine Verknüpfung der Textinformation mit dem Datenträger 1 bekannten Verschleierungsdaten, z.B. mit einer Transaktionsnummer (TAN) des Benutzers, erfolgen, die der Datenträger 1 rückgängig machen kann. Die Verwendung einer TAN oder von ähnlichen variablen und dem Benutzer eindeutig zugeordneten Verschleierungsdaten hat den zusätzlichen Effekt, dass sich der Benutzer über ihre Kenntnis zusätzlich gegenüber dem Datenträger 1 authentisieren kann.

Zur weiteren Erhöhung der Datenkommunikationssicherheit ist es prinzipiell in jedem der im Zusammenhang mit den illustrierten Verfahren genannten Datenkommunikationsschritte möglich, die Daten verschlüsselt zu über-tragen und anschließend zur Weiterverarbeitung zu entschlüsseln. Dies kann sowohl die Übertragung von Datensignalen als auch von Akustiksignalen betreffen. Die Verschlüsselung kann hierbei sowohl symmetrisch als auch asymmetrisch erfolgen, z.B. mittels auf dem Datenträger 1 und auf dem Endgerät 10 vorliegenden, korrespondierenden privaten und öffentlichen Schlüsseln.

In den bisher beschriebenen Ausgestaltungen wurde zunächst davon ausgegangen, dass die Wiedergabe von Akustiksignalen durch das Endgerät erfolgt, in welchem der Datenträger während der Transaktion eingesetzt ist.

Grundsätzlich ist es jedoch denkbar, dass der Datenträger aus dem Endgerät entnommen und zur Wiedergabe des Akustiksignals in ein weiteres Gerät, vorzugsweise ein Wiedergabegerät für Multimediadaten, eingesetzt wird. Der Benutzer definiert die Transaktionsdaten unter Verwendung des Endgerätes und kontrolliert die Transaktionsdaten anhand des ihm wiedergegebenen Akustiksignals mit Hilfe des Wiedergabegerätes.

Dieses Prinzip ist im Übrigen anwendbar unabhängig von dem konkreten Signaltyp. D.h. der analoge Vorteil kann erreicht werden, wenn der Datenträger ein Bildsignal erzeugt, das dann in dem Wiedergabegerät, beispielsweise in der Form eines digitalen Bilderrahmens, angezeigt wird.

Bettet der Datenträger beispielsweise die Transaktionsdaten und eine Transaktionsnummer TAN in ein Bild (oder ein Akustiksignal) ein, so kann der Benutzer die ihm auf dem Wiedergabegerät angezeigten (wiedergegebenen) Transaktionsdaten verifizieren. Wenn er die Transaktionsdaten erkannt hat, gibt er auf dem Endgerät die TAN ein, die er in dem ihm auf dem Wiedergabegerät angezeigten Bild erkannt hat Die Transaktion wird vorzugsweise erst freigegeben, wenn der Datenträger die von ihm in das Bild (Akustiksignal) eingebettete TAN als Freigabebestätigung empfangen hat.

Die Verwendung eines separaten Wiedergabegerätes hat zunächst den Vorteil, dass ein Angreifer des Systems aufeinander abgestimmt parallel zwei Geräte modifizieren müsste.

Das Wiedergabegerät kann sehr einfach ausgestaltet sein und umfasst vorzugsweise insbesondere keine Transaktionsfähigkeit und/ oder keine Netzanbindung insbesondere nicht zu dem für die Transaktion verwendeten Daten- und/ oder Kommunikationsnetz. Da das Wiedergabegerät ein einfaches Standardgerät sein kann, auf welchem keine Anpassung nötig ist, entstehen weitere Vorteile. In der Regel wird ein solches geeignetes Wiedergabegerät überall verfügbar sein. Zudem ist es unwahrscheinlich, dass ein derart einfaches Gerät auf demselben Weg angegriffen werden kann wie das Endgerät oder überhaupt angegriffen werden kann, weil es beispielsweise nicht die Fähigkeit zum Laden von und/oder Modifizieren seiner Software umfasst.

In den bisher beschriebenen Ausgestaltungen wurde weiterhin zunächst davon ausgegangen, dass das Transaktionsakustiksignal in dem Datenträger erzeugt wird und von dem Datenträger an das Endgerät übertragen wird.

Geringfügig weniger sicher wäre es, wenn eine zentrale Instanz des Transaktionssystems, vorzugsweise ein Server, das Transaktionsakustiksignal erzeugt und an den Datenträger überträgt. Das Transaktionsakustiksignal wird dabei über eine sichere Ende-zu-Ende-Verbindung zwischen Datenträger und Server übertragen. Derartige Verbindungen sind hinreichend bekannt. Optional werden die Transaktionsdaten und/oder die benutzerspezifische Melodie zuvor von dem Datenträger über diese Verbindung an den Server übertragen. Auch in dieser Ausgestaltung erhält das Endgerät weiterhin das Transaktionsakustiksignal von dem Datenträger, also von einer vertrauenswürdigen Instanz.

Das Verfahren in einem portablen Datenträger zur Freigabe von für eine Abarbeitung ausgewählten Transaktionsdaten wäre dadurch gekennzeichnet, dass der Datenträger ein Transaktionsakustiksignal über eine sichere Datenverbindung von einer zentralen Instanz des Transaktionssystems empfängt, bei dessen akustischer Wiedergabe durch ein Endgerät zumindest für die Abarbeitung ausgewählte Transaktionsdaten mit einer für einen Benutzer des Datenträgers spezifischen Melodie akustisch überlagert wiedergegeben werden, und das Transaktionsakustiksignal an das Endgerät elektronisch überträgt. Diese Modifikation ist auf alle bisher beschriebenen Ausgestaltungen anwendbar.

## Patentansprüche

1. Verfahren in einem portablen Datenträger (1) zur Freigabe von für eine Abarbeitung ausgewählten Transaktionsdaten, **dadurch gekennzeichnet, dass** der Datenträger (1) ein Transaktionsakustiksignal (003; 103; 203) erzeugt (S007; S107; S207), bei dessen akustischer Wiedergabe durch ein Endgerät (10) zumindest für die Abarbeitung ausgewählte Transaktionsdaten mit einer für einen Benutzer des Datenträgers (1) spezifischen Melodie akustisch überlagert wiedergegeben werden (S009; S109; S209), und das Transaktionsakustiksignal (003; 103; 203) an das Endgerät (10) elektronisch überträgt (S008; S108; S208).

2. Verfahren nach Anspruch 1, **dadurch gekennzeichnet, dass** der Datenträger (1) das Transaktionsakustiksignal (003; 103; 203) derart erzeugt, dass der Benutzer infolge der Wiedergabe des Transaktionsakustiksignals (003; 103; 203) durch das Endgerät (10) sowohl eine zumindest teilweise Übereinstimmung der akustisch wiedergegebenen Melodie mit der benutzerspezifischen Melodie als auch eine Übereinstimmung der akustisch wiedergegebenen Transaktionsdaten mit den ausgewählten Transaktionsdaten zur Freigabe der Transaktionsdaten bestätigen kann.

3. Verfahren nach Anspruch 1 oder 2, **dadurch gekennzeichnet, dass** der Datenträger (1) das Transaktionsakustiksignal (003; 103; 203) erzeugt, indem ein auf dem Datenträger (1) vorliegendes, die benutzerspezifische Melodie wiedergebendes Benutzerakustiksignal (8) und ein die Transaktionsdaten wiedergebendes Sprachakustiksignal akustisch überlagert werden (S007; S107; S207).

4. Verfahren nach Anspruch 3, **dadurch gekennzeichnet, dass** ein Benutzerakustiksignal (8) in den Datenträger (1) eingespielt wird, das eine von dem Benutzer bestimmte benutzerspezifische Melodie wiedergibt, wobei das die benutzerspezifische Melodie wiedergebende Benutzerakustiksignal (8) entweder von dem Benutzer angegeben wurde oder aus einer von dem Benutzer vorgesungenen oder vorgespielten benutzerspezifischen Melodie erzeugt wurde.

5. Verfahren nach Anspruch 3 oder 4, **dadurch gekennzeichnet, dass** ein Benutzerakustiksignal (8) in den Datenträger eingespielt wird, das eine allgemein bekannte benutzerspezifische Melodie wiedergibt, die akustisch verfremdet wurde.

6. Verfahren nach einem der Ansprüche 3 bis 5, **dadurch gekennzeichnet, dass** das die benutzerspezifische Melodie wiedergebende Benutzerakustiksignal (8) und/ oder ein für das Sprachakustiksignal zugrunde liegendes Akustiksignal bei einer Personalisierung des Datenträgers (1) auf dessen Benutzer in einen Speicher (5) des Datenträgers (1) eingespielt wird.

7. Verfahren nach Anspruch 3 bis 6, **dadurch gekennzeichnet, dass** der Datenträger (1) vor dem Erzeugen des Transaktionsakustiksignals (003; 103; 203) die für eine Abarbeitung ausgewählten Transaktionsdaten in ein Sprachakustiksignal wandelt oder ein die ausgewählten Transaktionsdaten wiedergebendes Sprachakustiksignal elektronisch empfängt, bei dessen akustischer Wiedergabe die Transaktionsdaten von dem Benutzer gesprochen oder gesungen wiedergegeben werden (S009; S109; S209).

8. Verfahren nach einem der Ansprüche 3 bis 7, **dadurch gekennzeichnet, dass** der Datenträger (1) die für eine Abarbeitung ausgewählten Transaktionsdaten oder eine den ausgewählten Transaktionsdaten eindeutig zugeordnete Transaktionsbezeichnung (002; 102; 202) von dem Endgerät (10) elektronisch empfängt (S005; S105; S205) und das Benutzerakustiksignal (8) und das Sprachakustiksignal, das die Transaktionsdaten oder die der empfangenen Transaktionsbezeichnung (002; 102; 202) zugeordneten Transaktionsdaten wiedergibt, akustisch überlagert (S007; S107; S207).

9. Verfahren nach Anspruch 8, **dadurch gekennzeichnet, dass** der Datenträger (1) eine mit den elektronisch empfangenen, ausgewählten Transaktionsdaten oder deren Transaktionsbezeichnung (102; 202) eindeutig verknüpfte Transaktionsidentifikation bereitstellt (S106; S206) und das Benutzerakustiksignal (103; 203) derart erzeugt (S107; S207), dass bei einer akustischen Wiedergabe des erzeugten Benutzerakustiksignals (103; 203) auch die erzeugte Transaktionsidentifikation mit der benutzerspezifischen Melodie akustisch überlagert wiedergegeben wird (S009; S109; S209), indem das die benutzerspezifische Melodie wiedergebende Benutzerakustiksignal (8) und ein die Transaktionsidentifikation wiedergebendes Sprachakustiksignal akustisch überlagert werden (S107; S207).

10. Verfahren nach Anspruch 9, **dadurch gekennzeichnet, dass** der Datenträger (1) die Transaktionsidentifikation (104; 204) von dem Endgerät (10) als Bestätigung sowohl einer zumindest teilweisen Übereinstimmung der von dem Endgerät (10) akustisch wiedergegebenen Melodie mit der benutzerspezifischen Melodie als auch einer Übereinstimmung der von dem Endgerät akustisch wiedergegebenen Transaktionsdaten mit den ausgewählten Transaktionsdaten elektronisch empfängt (S111; S211).

11. Verfahren nach Anspruch 10, **dadurch gekennzeichnet, dass** der Datenträger (1) die elektronisch empfangene Transaktionsidentifikation (104; 204) mit der bereitgestellten Transaktionsidentifikation vergleicht (S112; S212) und ein Freigabesignal (105, 106; 205) an das Endgerät (10) elektronisch überträgt (S114; S214), sofern die empfangene Transaktionsidentifikation (104; 204) mit der bereitgestellten Transaktionsidentifikation übereinstimmt.

12. Verfahren nach Anspruch 11, **dadurch gekennzeichnet, dass** der Datenträger (1) als Freigabesignal ein zumindest die Transaktionsdaten umfassendes Freigabedatensignal (205) erzeugt (S213) und an das Endgerät (10) zur Freigabe der Transaktionsdaten elektronisch überträgt (S214).

13. Verfahren nach Anspruch 11, **dadurch gekennzeichnet, dass** der Datenträger (1) als Freigabesignal ein Freigabeakustiksignal (105, 106) erzeugt (S113), bei dessen akustischer Wiedergabe durch das Endgerät (10) zumindest ein von dem Datenträger (1) erzeugter Freigabecode mit der benutzerspezifischen Melodie akustisch überlagert wiedergegeben wird (S115), und das erzeugte Freigabeakustiksignal (105,106) an das Endgerät (10) elektronisch überträgt (S114), wobei der Datenträger (1) bei Übereinstimmung eines daraufhin elektronisch empfangenen Freigabecodes (107) mit dem erzeugten Freigabecode ein Freigabebestätigungssignal (108) zur Freigabe der Transaktionsdaten an das Endgerät (10) elektronisch überträgt (S120).

14. Verfahren nach einem der Ansprüche 9 bis 13, **dadurch gekennzeichnet, dass** der Datenträger (1) zum Bereitstellen der Transaktionsidentifikation eine zufällige Transaktionsidentifikation erzeugt und mit den ausgewählten Transaktionsdaten oder deren Transaktionsbezeichnung (202) eindeutig verknüpft (S206).

15. Verfahren nach einem der Ansprüche 3 bis 14, **dadurch gekennzeichnet, dass** der Datenträger (1) eine Transaktionsliste (001;101; 201) mit für eine Abarbeitung auswählbaren Transaktionsdaten und den auswählbaren Transaktionsdaten jeweils eindeutig zugeordneten Transaktionsbezeichnungen (002; 102; 202) erstellt (S001; S101; S201), die erstellte Transaktionsliste (001;101; 201) an das Endgerät (10) elektronisch überträgt (S002; S102; S202) und für eine Abarbeitung aus der Transaktionsliste (101) ausgewählte Transaktionsdaten oder die den ausgewählten Transaktionsdaten jeweils eindeutig zugeordnete Transaktionsbezeichnung (002; 102; 202) von dem Endgerät (10) elektronisch empfängt (S005; S105; S205).

16. Portabler Datenträger (1) zur Freigabe von für eine Abarbeitung ausgewählten Transaktionsdaten, umfassend zumindest einen Prozessor (3), einen Speicher (5) und eine Datenkommunikationsschnittstelle (2) zur Datenkommunikation mit einem Endgerät (10), **dadurch gekennzeichnet, dass** in dem Speicher (5) zumindest ein Benutzerakustiksignal (8) gespeichert ist, bei dessen akustischer Wiedergabe eine für einen Benutzer des Datenträgers (1) spezifische Melodie wiedergegeben wird, und dadurch, dass der Datenträger (1) eine Steuereinrichtung (7) umfasst, die eingerichtet ist, ein Transaktionsakustiksignal (003; 103; 203) durch akustisches Überlagern des gespeicherten Benutzerakustiksignals (8) und zumindest eines Sprachakustiksignal, das für eine Abarbeitung ausgewählte Transaktionsdaten wiedergibt, derart zu erzeugen (S007; S107; S207), dass bei einer akustischen Wiedergabe des erzeugten Transaktionsakustiksignals (003;103; 203) zumindest die ausgewählte Transaktionsdaten mit der benutzerspezifischen Melodie akustisch überlagert wiedergegeben werden.

17. Datenträger (1) nach Anspruch 16, **dadurch gekennzeichnet, dass** der Datenträger (1) eingerichtet ist, ein Verfahren nach einem der Ansprüche 1 bis 15 durchzuführen.

18. Transaktionssystem, umfassend einen portablen Datenträger (1) gemäß Anspruch 16 oder 17 und ein Endgerät (10), das eingerichtet ist, ein von dem Datenträger (1) elektronisch empfangenes Transaktionsakustiksignal (003; 103; 203) akustisch wiederzugeben (S009; S109; S209) und die ausgewählten Transaktionsdaten nur dann abzuarbeiten (S011; S121; 216), wenn der Benutzer des Datenträgers (1) sowohl eine zumindest teilweise Übereinstimmung der akustisch wiedergegebenen Melodie mit der benutzerspezifischen Melodie als auch eine Übereinstimmung der akustisch wiedergegebenen Transaktionsdaten mit den ausgewählten Transaktionsdaten gegenüber dem Endgerät (10) bestätigt (S010; S110, S116; S210).

## Claims

1. A method in a portable data carrier (1) for clearing transaction data selected for a processing, **characterized in that** the data carrier (1) generates a transaction acoustic signal (003; 103; 203) (S007; S107; S207) upon whose acoustic reproduction by an end device (10) at least transaction data selected for the processing are reproduced superimposed acoustically with a melody specific to a user of the data carrier (1) (S009; S109; S209), and electronically transfers the transaction acoustic signal (003; 103; 203) to the end device (10) (S008; S108; S208).

2. The method according to claim 1, **characterized in that** the data carrier (1) generates the transaction acoustic signal (003; 103; 203) such that the user, as a result of the reproduction of the transaction acoustic signal (003; 103; 203) by the end device (10), can confirm, for clearing the transaction data, both an at least partial match of the acoustically reproduced melody with the user-specific melody and a match of the acoustically reproduced transaction data with the selected transaction data.

3. The method according to claim 1 or 2, **characterized in that** the data carrier (1) generates the transaction acoustic signal (003; 103; 203) by acoustic superimposition of a user acoustic signal (8) present on the data carrier (1) and reproducing the user-specific melody and of a speech acoustic signal reproducing the transaction data (S007; S107; S207).

4. The method according to claim 3, **characterized in that** there is loaded to the data carrier (1) a user acoustic signal (8) which reproduces a user-specific melody determined by the user, whereby the user acoustic signal (8) reproducing the user-specific melody was either specified by the user or generated from a user-specific melody sung or played by the user.

5. The method according to claim 3 or 4, **characterized in that** there is loaded to the data carrier a user acoustic signal (8) which reproduces a commonly known user-specific melody which has been acoustically defamiliarized.

6. The method according to any of claims 3 to 5, **characterized in that** the user acoustic signal (8) reproducing the user-specific melody, and/or an acoustic signal underlying the speech acoustic signal, is loaded to a memory (5) of the data carrier (1) upon a personalization of the data carrier (1) to its user.

7. The method according to claim 3 to 6, **characterized in that** the data carrier (1), before the generation of the transaction acoustic signal (003; 103; 203), converts the transaction data selected for a processing to a speech acoustic signal or electronically receives a speech acoustic signal reproducing the selected transaction data, upon whose acoustic reproduction the transaction data are reproduced as spoken or sung by the user (S009; S109; S209).

8. The method according to any of claims 3 to 7, **characterized in that** the data carrier (1) electronically receives from the end device (10) the transaction data selected for a processing or a transaction designation (002; 102; 202) uniquely associated with the selected transaction data (S005; S105; S205), and acoustically superimposes the user acoustic signal (8) and the speech acoustic signal which reproduces the transaction data or the transaction data associated with the received transaction designation (002; 102; 202) (S007; S107; S207).

9. The method according to claim 8, **characterized in that** the data carrier (1) supplies a transaction identification uniquely linked with the electronically received, selected transaction data or their transaction designation (102; 202) (S106; S206) and generates the user acoustic signal (103; 203) (S107; S207) such that upon an acoustic reproduction of the generated user acoustic signal (103; 203) the generated transaction identification is also reproduced superimposed acoustically with the user-specific melody (S009; S109; S209), by acoustic superimposition of the user acoustic signal (8) reproducing the user-specific melody and of a speech acoustic signal reproducing the transaction identification (S107; S207).

10. The method according to claim 9, **characterized in that** the data carrier (1) electronically receives the transaction identification (104; 204) from the end device (10) as confirmation both of an at least partial match of the melody acoustically reproduced by the end device (10) with the user-specific melody and of a match of the transaction data acoustically reproduced by the end device with the selected transaction data (S111; S211).

11. The method according to claim 10, **characterized in that** the data carrier (1) compares the electronically received transaction identification (104; 204) with the supplied transaction identification (S112; S212) and electronically transfers a clearance signal (105, 106; 205) to the end device (10) (S114; S214) if the received transaction identification (104; 204) matches the supplied transaction identification.

12. The method according to claim 11, **characterized in that** the data carrier (1) generates as a clearance signal a clearance data signal (205) comprising at least the transaction data (S213) and electronically transfers it to the end device (10) for clearing the transaction data (S214).

13. The method according to claim 11, **characterized in that** the data carrier (1) generates as a clearance signal a clearance acoustic signal (105, 106) (S113) upon whose acoustic reproduction by the end device (10) at least a clearance code generated by the data carrier (1) is reproduced superimposed acoustically with the user-specific melody (S115), and electronically transfers the generated clearance acoustic signal (105, 106) to the end device (10) (S114), whereby the data carrier (1), in case of a match of a thereupon electronically received clearance code (107) with the generated clearance code, electronically transfers a clearance confirmation signal (108) to the end device (10) for clearing the transaction data (S120).

14. The method according to any of claims 9 to 13, **characterized in that** the data carrier (1), for supplying the transaction identification, generates a random transaction identification and links it uniquely with the selected transaction data or their transaction designation (202) (S206).

15. The method according to any of claims 3 to 14, **characterized in that** the data carrier (1) creates a transaction list (001; 101; 201) with transaction data selectable for a processing and transaction designations (002; 102; 202) respectively uniquely associated with the selectable transaction data (S001; S101; S201), electronically transfers the created transaction list (001; 101; 201) to the end device (10) (S002; S102; S202) and electronically receives from the end device (10) transaction data selected from the transaction list (101) for a processing or the transaction designation (002; 102; 202) respectively uniquely associated with the selected transaction data (S005; S105; S205).

16. A portable data carrier (1) for clearing transaction data selected for a processing, comprising at least a processor (3), a memory (5) and a data communication interface (2) for data communication with an end device (10), **characterized in that** there is stored in the memory (5) at least a user acoustic signal (8) upon whose acoustic reproduction a melody specific to a user of the data carrier (1) is reproduced, and **in that** the data carrier (1) comprises a control device (7) which is set up to generate a transaction acoustic signal (003; 103; 203) by acoustic superimposition of the stored user acoustic signal (8) and of at least one speech acoustic signal which reproduces transaction data selected for a processing (S007; S107; S207) such that upon an acoustic reproduction of the generated transaction acoustic signal (003; 103; 203) at least the selected transaction data are reproduced superimposed acoustically with the user-specific melody.

17. The data carrier (1) according to claim 16, **characterized in that** the data carrier (1) is set up to carry out a method according to any of claims 1 to 15.

18. A transaction system, comprising a portable data carrier (1) according to claim 16 or 17 and an end device (10) which is set up to acoustically reproduce a transaction acoustic signal (003; 103; 203) electronically received from the data carrier (1) (S009; S109; S209), and to process the selected transaction data (S011; S121; 216) only when the user of the data carrier (1) confirms vis-à-vis the end device (10) both an at least partial match of the acoustically reproduced melody with the user-specific melody and a match of the acoustically reproduced transaction data with the selected transaction data (S010; S110, S 116; S210).

## Revendications

1. Procédé, dans un support de données portable (1), de déblocage de données de transaction sélectionnées pour un accomplissement de traitement, **caractérisé en ce que** le support de données (1) génère (S007; S107; S207) un signal acoustique de transaction (003; 103; 203) lors de la reproduction acoustique duquel par une installation terminale (10) au moins des données de transaction sélectionnées pour l'accomplissement du traitement sont reproduites (S009; S109; S209) de manière acoustiquement superposée avec une mélodie spécifique pour un utilisateur du support de données (1), et transmet électroniquement (S008; S108; S208) le signal acoustique de transaction (003; 103; 203) à l'installation terminale (10).

2. Procédé selon la revendication 1, **caractérisé en ce que** le support de données (1) génère le signal acoustique de transaction (003; 103; 203) de telle manière que l'utilisateur, à la suite de la reproduction du signal acoustique de transaction (003; 103; 203) par l'installation terminale (10), peut, pour le déblocage de données de transaction, confirmer tant une concordance au moins partielle de la mélodie reproduite acoustiquement avec la mélodie spécifique de l'utilisateur qu'une concordance des données de transaction reproduites acoustiquement avec les données de transaction sélectionnées.

3. Procédé selon la revendication 1 ou 2, **caractérisé en ce que** le support de données (1) génère le signal acoustique de transaction (003; 103; 203) **en ce qu'**un signal acoustique d'utilisateur (8) se trouvant sur le support de données (1) et reproduisant la mélodie spécifique de l'utilisateur et un signal acoustique vocal reproduisant les données de transaction sont acoustiquement superposés (S007; S107; S207).

4. Procédé selon la revendication 3, **caractérisé en ce qu'**un signal acoustique d'utilisateur (8) reproduisant une mélodie spécifique de l'utilisateur déterminée par l'utilisateur est enregistré dans le support de données (1), le signal acoustique d'utilisateur (8) reproduisant la mélodie spécifique de l'utilisateur ayant été soit indiqué par l'utilisateur, soit généré à partir d'une mélodie spécifique de l'utilisateur chantée ou jouée par l'utilisateur.

5. Procédé selon la revendication 3 ou 4, **caractérisé en ce qu'**un signal acoustique d'utilisateur (8) reproduisant une mélodie spécifique de l'utilisateur généralement connue et qui a été acoustiquement rendue quelque peu autre est enregistré dans le support de données.

6. Procédé selon une des revendications de 3 à 5, **caractérisé en ce que** le signal acoustique d'utilisateur (8) reproduisant la mélodie spécifique de l'utilisateur et/ou un signal acoustique dont émane le signal acoustique vocal est enregistré dans une mémoire (5) du support de données (1) lors d'une personnalisation du support de données (1) propre à son utilisateur.

7. Procédé selon revendication 3 à 6, **caractérisé en ce que**, avant la génération du signal acoustique de transaction (003; 103; 203), le support de données (1) transforme en un signal acoustique vocal les données de transaction sélectionnées pour un accomplissement de traitement ou reçoit électroniquement un signal acoustique vocal reproduisant les données de transaction sélectionnées lors de la reproduction acoustique duquel les données de transaction sont reproduites (S009; S109; S209) par l'utilisateur **en ce qu'**il les prononce ou les chante.

8. Procédé selon une des revendications de 3 à 7, **caractérisé en ce que** le support de données (1) reçoit électroniquement (S005; S105; S205) de la part de l'installation terminale (10) les données de transaction sélectionnées pour un accomplissement de traitement ou une dénomination de transaction (002; 102; 202) affectée de manière univoque aux données de transaction sélectionnées et superpose acoustiquement (S007; S107; S207) le signal acoustique d'utilisateur (8) et le signal acoustique vocal qui reproduit les données de transaction ou les données de transaction affectées à la dénomination de transaction reçue (002; 102; 202).

9. Procédé selon revendication 8, **caractérisé en ce que** le support de données (1) met à disposition (S006; S206) une identification de transaction combinée de manière univoque aux données de transaction sélectionnées et reçues électroniquement ou à leur dénomination de transaction (102; 202) et génère (S107; S207) le signal acoustique d'utilisateur (103; 203) de telle manière que, lors d'une reproduction acoustique du signal acoustique d'utilisateur généré (103; 203), l'identification de transaction générée est aussi reproduite de manière superposée acoustiquement (S009; S109; S209) avec la mélodie spécifique de l'utilisateur, **en ce que** le signal acoustique d'utilisateur (8) reproduisant la mélodie spécifique de l'utilisateur et un signal acoustique vocal reproduisant l'identification de transaction sont superposés acoustiquement (S107; S207).

10. Procédé selon revendication 9, **caractérisé en ce que** le support de données (1) reçoit (S111; S211) électroniquement de la part de l'installation terminale (10) l'identification de transaction (104; 204) en tant que confirmation tant d'une concordance au moins partielle de la mélodie reproduite acoustiquement par l'installation terminale (10) avec la mélodie spécifique de l'utilisateur que d'une concordance des données de transaction reproduites acoustiquement par l'installation terminale avec les données de transaction sélectionnées.

11. Procédé selon revendication 10, **caractérisé en ce que** le support de données (1) compare (S112; S212) l'identification de transaction (104; 204) reçue électroniquement avec l'identification de transaction mise à disposition et transmet électroniquement (S114; S214) à l'installation terminale (10) une signal de déblocage (105, 106; 205) pour autant que l'identification de transaction (104; 204) reçue concorde avec l'identification de transaction mise à disposition.

12. Procédé selon revendication 11, **caractérisé en ce que** le support de données (1) génère (S213) en tant que signal de déblocage un signal de données de déblocage (205) comprenant au moins les données de transaction et le transmet électroniquement (S214) à l'installation terminale (10) pour le déblocage des données de transaction.

13. Procédé selon revendication 11, **caractérisé en ce que** le support de données (1) génère (S113) en tant que signal de déblocage un signal acoustique de déblocage (105, 106) lors de la reproduction acoustique duquel par l'installation terminale (10) au moins un code de déblocage généré par le support de données (1) est reproduit (S115) de manière superposée acoustiquement avec la mélodie spécifique de l'utilisateur, et transmet électroniquement (S114) à l'installation terminale (10) le signal acoustique de déblocage généré (105, 106), le support de données (1) transmettant (S120), quand il y a concordance entre un code de déblocage (107) reçu électroniquement à la suite de cela et le code de déblocage généré, électroniquement à l'installation terminale (10) un signal de confirmation de déblocage (108) pour le déblocage des données de transaction.

14. Procédé selon une des revendications de 9 à 13, **caractérisé en ce que** le support de données (1) génère pour la mise à disposition de l'identification de transaction une identification de transaction aléatoire et la combine de manière univoque (S206) aux données de transaction sélectionnées ou à leur dénomination de transaction (202).

15. Procédé selon une des revendications de 3 à 14, **caractérisé en ce que** le support de données (1) établit (S001; S101; S201) une liste de transactions (001; 101; 201) incluant des données de transaction sélectionnables pour un accomplissement de traitement et les dénominations de transaction (002; 102; 202) affectées de manière respectivement univoque aux données de transaction sélectionnables, transmet électroniquement (S002; S102; S202) à l'installation terminale (10) la liste de transactions (001; 101; 201) établie et reçoit électroniquement (S005; S105; S205) de la part de l'installation terminale (10), pour un accomplissement de traitement, des données de transaction sélectionnées dans la liste de transactions (101) ou la dénomination de transaction (002; 102; 202) affectée de manière respectivement univoque aux données de transaction sélectionnées.

16. Support de données portable (1) destiné au déblocage de données de transaction sélectionnées pour un accomplissement de traitement, comprenant au moins un processeur (3), une mémoire (5) et une interface de communication de données (2) pour la communication de données avec une installation terminale (10), **caractérisé en ce qu'**au moins un signal acoustique d'utilisateur (8) est mémorisé dans la mémoire (5), lors de la reproduction acoustique duquel une mélodie spécifique pour un utilisateur du support de données (1) est reproduite, et **en ce que** le support de données (1) comprend un dispositif de commande (7) configuré pour, par superposition acoustique du signal acoustique d'utilisateur (8) mémorisé et d'au moins un signal acoustique vocal reproduisant des données de transaction sélectionnées pour un accomplissement de traitement, générer (S007; S107; S207) de telle manière un signal acoustique de transaction (003; 103; 203) que, lors d'une reproduction acoustique du signal acoustique de transaction généré (003; 103; 203), au moins les données de transaction sélectionnées sont reproduites de manière acoustiquement superposée avec la mélodie spécifique de l'utilisateur.

17. Support de données portable (1) selon revendication 16, **caractérisé en ce que** le support de données (1) est configuré pour accomplir un procédé selon une des revendications de 1 à 15.

18. Système de transaction, comprenant un support de données portable (1) selon la revendication 16 ou 17 et une installation terminale (10) configurée pour reproduire acoustiquement (S009; S109; S209) un signal acoustique de transaction (003; 103; 203) reçu électroniquement de la part du support de données (1) et pour n'accomplir le traitement (S011; S121; 216) des données de transaction sélectionnées que quand l'utilisateur du support de données (1) confirme (S010; S110, S116; S210) vis-à-vis de l'installation terminale (10) tant une concordance au moins partielle de la mélodie reproduite acoustiquement avec la mélodie spécifique de l'utilisateur qu'une concordance des données de transaction reproduites acoustiquement avec les données de transaction sélectionnées.
